# EUROPEAN PATENT APPLICATION

(11) **EP 4 723 660 A1**
(43) Date of publication of application: **08.04.2026**
(21) Application number: 24810963.9
(22) Date of filing: 14.05.2024
(51) Int. Cl.: H04N 23/60, G06T 7/00, H04N 7/18

(54) **SENSOR DEVICE, PROGRAM, AND INFORMATION PROCESSING METHOD**

(30) Priority: 24.05.2023 JP 2023085473
(71) Applicant: Sony Semiconductor Solutions Corporation, Atsugi-shi, Kanagawa 243-0014 (JP)
(72) Inventor: KOJIMA, Yuto, Atsugi-shi, Kanagawa 243-0014 (JP); KAWASAKI, Ryohei, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/017719
(87) International publication number: WO 2024/241956

(57) **Abstract**

A sensor apparatus according to the present technology includes: a pixel array unit in which pixels each including a light-receiving portion are arrayed two-dimensionally; a storage unit which stores a machine learning model that performs inference processing based on pixel data output from the pixel array unit; an inference processing unit which performs the inference processing using the machine learning model; and a relearning processing unit which performs relearning processing for updating the machine learning model.

## Description

### Technical Field

The present technology relates to a technical field of a sensor apparatus, a program, and an information processing method for performing inference processing that uses a machine learning model.

### Background Art

There is known a technology for detecting a predetermined subject from an image by performing inference processing that uses a machine learning model (see, for example, Patent Literature 1 described below).

### Citation List

### Patent Literature

Patent Literature 1: Japanese Patent Application Laid-open No. 2022-126373

### Disclosure of Invention

### Technical Problem

Incidentally, regarding such an inference that uses a machine learning model, precision of an inference result is lowered due to a difference between image data used for learning and image data used during operation.

To compensate for such lowering of the precision, relearning (retraining) of the machine learning model may be performed using new image data.

Such relearning processing is performed, for example, on a cloud server and/or the like outside a camera apparatus, but this causes problems regarding an increase in a communication amount involved in transmission of image data used for relearning and a risk of information related to privacy being incorporated into image data.

The present technology has been made in view of the problems as described above and aims at favorably performing relearning of a machine learning model.

### Solution to Problem

A sensor apparatus according to the present technology includes: a pixel array unit in which pixels each including a light-receiving portion are arrayed two-dimensionally; a storage unit which stores a machine learning model that performs inference processing based on pixel data output from the pixel array unit; an inference processing unit which performs the inference processing using the machine learning model; and a relearning processing unit which performs relearning processing for updating the machine learning model.

Accordingly, the machine learning model is updated within the sensor apparatus.

### Brief Description of Drawings

[Fig. 1] A diagram showing a configuration example of an information processing system.
[Fig. 2] A diagram for explaining each device that registers and/or downloads AI models and AI applications via a marketplace function provided in a cloud-side information processing apparatus.
[Fig. 3] A diagram showing an example of a flow of processing executed by each apparatus when registering and/or downloading an AI model or an AI application via the marketplace function.
[Fig. 4] A diagram showing an example of a flow of processing executed by each apparatus when deploying an AI application and an AI model.
[Fig. 5] A diagram for explaining a connection mode between the cloud-side information processing apparatus and an edge-side information processing apparatus.
[Fig. 6] A functional block diagram of the cloud-side information processing apparatus.
[Fig. 7] A block diagram showing an example of an internal configuration of a camera apparatus according to a first embodiment.
[Fig. 8] A block diagram showing a functional configuration of an image sensor according to the first embodiment.
[Fig. 9] A diagram showing a flow of processing executed by each unit of the camera apparatus.
[Fig. 10] A diagram showing an example of a timing chart.
[Fig. 11] A block diagram showing an example of an internal configuration of a camera apparatus according to a second embodiment.
[Fig. 12] A block diagram showing a functional configuration of an image sensor according to the second embodiment.
[Fig. 13] A block diagram showing an example of a hardware configuration of an information processing apparatus.

### Modes for Carrying Out the Invention

Hereinafter, embodiments of an information processing apparatus according to the present technology will be described in the following order with reference to the attached drawings.
<1. First embodiment>
<1-1. Configuration of information processing system>
<1-2. Registration of AI model and AI application>
<1-3. General outline of functions of system>
<1-4. Configuration of camera apparatus>
<1-5. Functional configuration of image sensor>
<1-6. Flow of processing>
<1-7. Modified example in first embodiment>
<2. Second embodiment>
<3. Modified examples>
<4. Configuration of information processing apparatus>
<5. Summary>
<6. Present technology>

### <1. First embodiment>

A configuration example of an information processing system S including a camera apparatus 1 in a first embodiment will be described with reference to the attached drawings.

### <1-1. Configuration of information processing system>

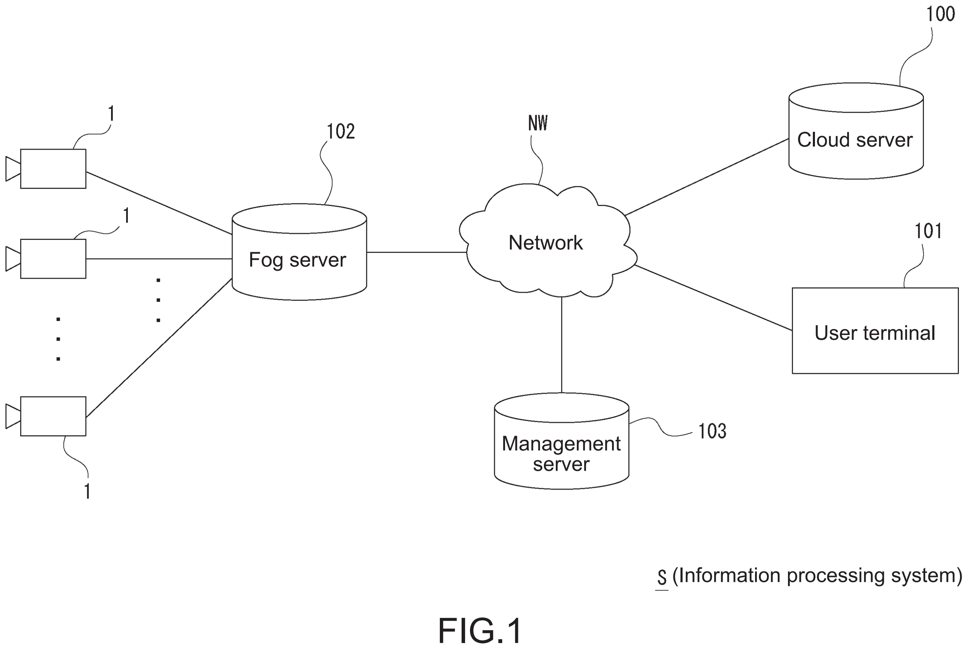

Fig. 1 is a block diagram showing a schematic configuration example of the information processing system S according to the first embodiment.

As shown in the figure, the information processing system S includes at least a cloud server 100, a user terminal 101, a plurality of camera apparatuses 1, a fog server 102, and a management server 103. In the present example, for example, at least the cloud server 100, the user terminal 101, the fog server 102, and the management server 103 are capable of communicating with one another via a network NW such as the Internet.

The cloud server 100, the user terminal 101, the fog server 102, and the management server 103 are each configured as an information processing apparatus equipped with a microcomputer including a CPU (Central Processing Unit), a ROM (Read Only Memory), and a RAM (Random Access Memory).

Here, the user terminal 101 is an information processing apparatus that is assumed to be used by a user who receives a service that uses the information processing system S. Moreover, the management server 103 is an information processing apparatus that is assumed to be used by a provider of the service.

Each of the camera apparatuses 1 includes an image sensor such as a CCD (Charge Coupled Device) image sensor or a CMOS (Complementary Metal Oxide Semiconductor) image sensor, and captures an image of a subject to obtain image data (captured image data) as digital data.

Further, as will be described later, each of the camera apparatuses 1 also has a function of performing processing on a captured image using AI (Artificial Intelligence) (for example, image recognition processing, image detection processing, and the like). In descriptions hereinafter, various types of processing with respect to images, such as the image recognition processing and the image detection processing, will simply be referred to as "image processing". For example, various types of processing with respect to images using a machine learning model obtained by causing AI to perform machine learning will be referred to as "AI image processing". Furthermore, the machine learning model will be referred to as an "AI model".

Each of the camera apparatuses 1 is configured to be capable of performing data communication with the fog server 102, and is capable of, for example, transmitting various types of data such as processing result information indicating a result of processing that uses AI (image processing and/or the like) to the fog server 102 and receiving various types of data from the fog server 102.

Here, regarding the information processing system S shown in Fig. 1, for example, a use is assumed in which the fog server 102 or the cloud server 100 generates analysis information of a subject based on the processing result information obtained by the image processing of each camera apparatus 1, and the generated analysis information is viewed by a user via the user terminal 101.

It is noted that from a viewpoint of privacy, it is desirable for information to be transmitted from the camera apparatus 1 to the fog server 102 and/or the cloud server 100 to not include personal information. In other words, it is desirable for image data capturing a face of a customer as the subject to not be output to the outside from the camera apparatus 1 or the image sensor.

Various uses of surveillance cameras are conceivable as the use of each of the camera apparatuses 1. Examples of the use include a surveillance camera for indoors in a store, an office, a home, and the like, a surveillance camera for monitoring outdoors such as a parking lot, a street, and the like (including a traffic monitoring camera and the like), a surveillance camera for a manufacturing line in FA (Factory Automation) and IA (Industrial Automation), surveillance cameras for monitoring inside and outside of a vehicle, and the like.

For example, in the case of a use as a surveillance camera in a store, the plurality of camera apparatuses 1 may be arranged at predetermined positions in the store so that the user can check demographics of customers (genders, age groups, and the like), behaviors (flow lines) in the store, and the like. In this case, information on the demographics of customers, information on the flow lines of customers in the store, information on a congestion at a cash register (for example, a waiting time at the cash register), and the like may be generated as the analysis information described above.

Alternatively, in the case of a use as a traffic monitoring camera, the camera apparatuses 1 may be arranged at repsective positions near the road so that the user can recognize information on passing vehicles, such as a license plate number (vehicle number), a color of the vehicle, and a type of the vehicle. In this case, information on the license plate number, the color of the vehicle, the type of the vehicle, and the like may be generated as the analysis information described above.

Furthermore, when using a traffic monitoring camera in a parking lot, the camera may be arranged to be capable of monitoring each of the parked vehicles so as to monitor whether or not a suspicious individual behaving suspiciously is present around each of the vehicles, and if there is a suspicious individual, notify of the fact that there is a suspicious individual, an attribute of the suspicious individual (gender and/or age group), and the like.

Furthermore, it is also possible to monitor available spaces on streets and in parking lots and notify the user of a location of an available space to park a car.

For example, in the case of the use in monitoring a store described above, the fog server 102 is assumed to be arranged for each monitoring target, such as being arranged in a store to be monitored together with each of the camera apparatuses 1. By providing the fog server 102 for each monitoring target such as a store in this manner, it becomes unnecessary for the cloud server 100 to directly receive transmission data from the plurality of camera apparatuses 1 in the monitoring target, and thus a processing load of the cloud server 100 is reduced.

It is noted that when there are a plurality of stores to be monitored and all of those stores belong to the same group, it is possible to provide one fog server 102 with respect to the plurality of stores instead of providing the fog server 102 for each store. In other words, the fog server 102 is not limited to being provided for each monitoring target, and it is also possible to provide one fog server 102 with respect to a plurality of monitoring targets.

It is noted that when the function of the fog server 102 can be provided to the cloud server 100 or the camera apparatus 1 side due to the reason that the cloud server 100 or the camera apparatus 1 side has a processing capacity, and/or the like, it is also possible to omit the fog server 102 from the information processing system S and directly connect each of the camera apparatuses 1 to the network NW, so that the cloud server 100 directly receives the transmission data from the plurality of camera apparatuses 1.

In descriptions below, the various apparatuses described above can be broadly categorized into a cloud-side information processing apparatus and an edge-side information processing apparatus.

The cloud server 100 and the management server 103 each correspond to the cloud-side information processing apparatus and belong to an apparatus group that provides a service that is assumed to be used by a plurality of users.

Further, the camera apparatuses 1 and the fog server 102 each correspond to the edge-side information processing apparatus and can be regarded as an apparatus group that is arranged in an environment prepared by a user who uses a cloud service.

It is noted that both the cloud-side information processing apparatus and the edge-side information processing apparatus may be provided in the same environment prepared by a user.

It is noted that the fog server 102 may be an on-premise server.

### <1-2. Registration of AI model and AI application>

As described above, in the information processing system S, AI image processing is performed in the camera apparatus 1 as the edge-side information processing apparatus, and advanced application functions are realized in the cloud server 100 as the cloud-side information processing apparatus using result information of the AI image processing on the edge side (for example, result information of the image recognition processing that uses AI).

Here, various methods are conceivable as a method of registering application functions in the cloud server 100 (or including the fog server 102) as the cloud-side information processing apparatus.

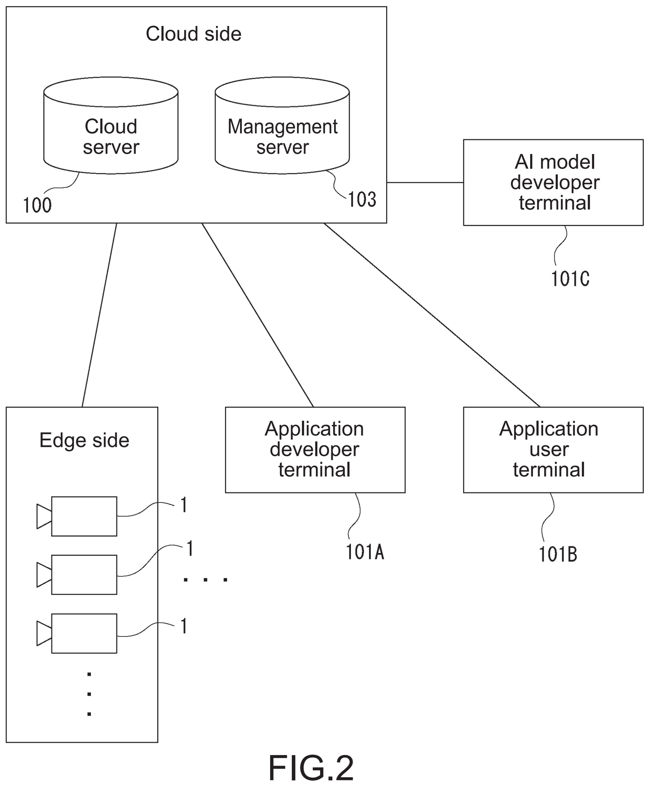

An example thereof will be described with reference to Fig. 2.

It is noted that although the illustration of the fog server 102 is omitted in Fig. 2, a configuration including the fog server 102 may also be used. In that case, the fog server 102 may assume some of the functions on the edge side.

The cloud server 100 and the management server 103 described above are information processing apparatuses that constitute an environment on the cloud side.

Further, the camera apparatuses 1 are information processing apparatuses that constitute an environment on the edge side.

It is noted that the camera apparatus 1 can be regarded as an apparatus including a control unit that performs overall control of the camera apparatus 1, and also as an apparatus including another apparatus as an image sensor that includes an arithmetic processing unit that performs various types of processesing including the AI image processing on captured images. In other words, the camera apparatus 1 as the edge-side information processing apparatus may be regarded as having mounted therein the image sensor as the another edge-side information processing apparatus.

Furthermore, the user terminals 101 used by users who use various services provided by the cloud-side information processing apparatuses include an application developer terminal 101A used by a user who develops an application used in the AI image processing, an application user terminal 101B used by a user who uses an application, an AI model developer terminal 101C used by a user who develops an AI model used in the AI image processing, and the like.

It is noted that of course, the application developer terminal 101A may also be used by a user who develops an application that does not use the AI image processing.

Learning data sets for performing learning using AI are prepared in the cloud-side information processing apparatus. A user who develops an AI model communicates with the cloud-side information processing apparatus using the AI model developer terminal 101C and downloads these learning data sets. At this time, the learning data set may be provided for a fee. For example, the AI model developer may purchase a learning data set by registering personal information in a marketplace prepared as a function on the cloud side (e-marketplace) so as to enable various functions and materials registered in the marketplace to be purchased.

After developing an AI model using the learning data set, the AI model developer registers the developed AI model in the marketplace using the AI model developer terminal 101C. Thus, an incentive may be paid to the AI model developer when the AI model is downloaded.

Furthermore, a user who develops an application downloads an AI model from the marketplace using the application developer terminal 101A, and develops an application using the AI model (hereinafter, will be referred to as an "AI application"). At this time, an incentive may be paid to the AI model developer as described above.

The application development user registers the developed AI application in the marketplace using the application developer terminal 101A. Thus, an incentive may be paid to the user who has developed the AI application when the AI application is downloaded.

A user who uses an AI application uses the application user terminal 101B to perform an operation to deploy the AI application and the AI model from the marketplace on the camera apparatus 1 as the edge-side information processing apparatus that the user manages. At this time, an incentive may be paid to the AI model developer.

This makes it possible to perform the AI image processing using the AI application and the AI model in the camera apparatus 1, and to not only capture images but also perform detection of customers and detection of vehicles by the AI image processing.

Here, the deployment of the AI application and AI model refers to installation of the AI application and AI model in a target (apparatus) as an execution entity so that the target as the execution entity can use the AI application and AI model, that is, can execute at least a part of a program as the AI application.

Furthermore, in the camera apparatus 1, attribute information of customers may be extracted from captured images captured by the camera apparatus 1 using the AI image processing.

These pieces of attribute information are transmitted from the camera apparatus 1 to the cloud-side information processing apparatus via the network NW.

A cloud application is deployed on the cloud-side information processing apparatus, and each user can use the cloud application via the network NW. In the cloud application, an application for analyzing flow lines of customers using the attribute information and/or captured image of the customers, and the like are prepared. Such a cloud application is uploaded by the application development user and/or the like.

By using the cloud application for a flow line analysis using the application user terminal 101B, the application user can perform the flow line analysis of customers visiting his/her own store and view an analysis result. Viewing of the analysis result is performed by, for example, graphically presenting the flow lines of customers on a store map.

Further, the result of the flow line analysis may be displayed in a form of a heat map, and the analysis result may be viewed by presenting a density of customers, and/or the like.

Furthermore, those pieces of information may be sorted for each attribute information of customers for display.

In the cloud-side marketplace, AI models optimized for each user may be registered. For example, a captured image captured by the camera apparatus 1 arranged in a store managed by a certain user is uploaded and accumulated as appropriate in the cloud-side information processing apparatus.

Further, when information to be uploaded from the camera apparatus 1 to the cloud-side information processing apparatus (captured image and/or the like) includes personal information, data from which privacy-related information has been deleted may be uploaded in view of privacy protection, or data from which privacy-related information has been deleted may be made available to the AI model development user and/or the application development user.

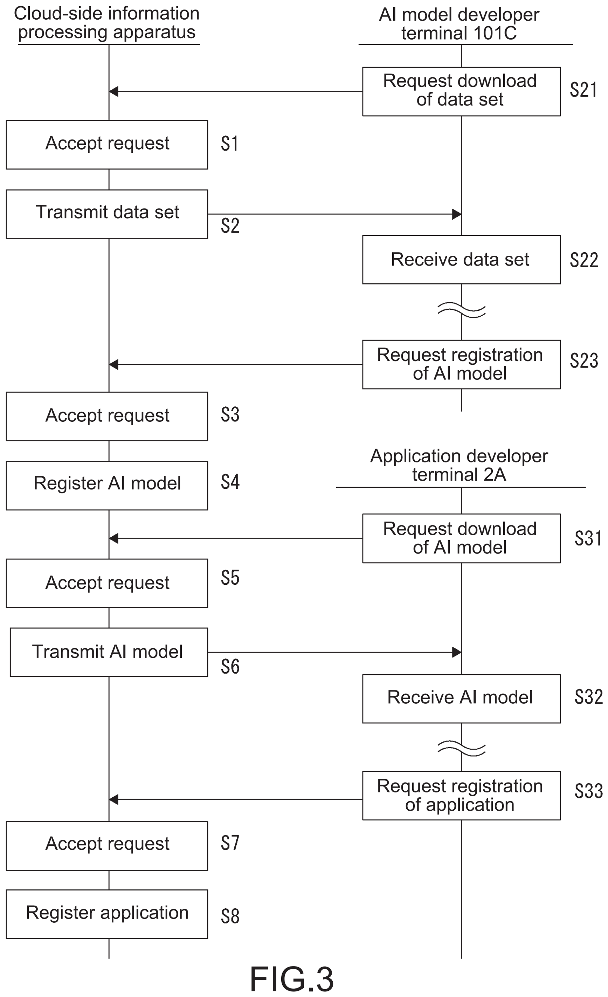

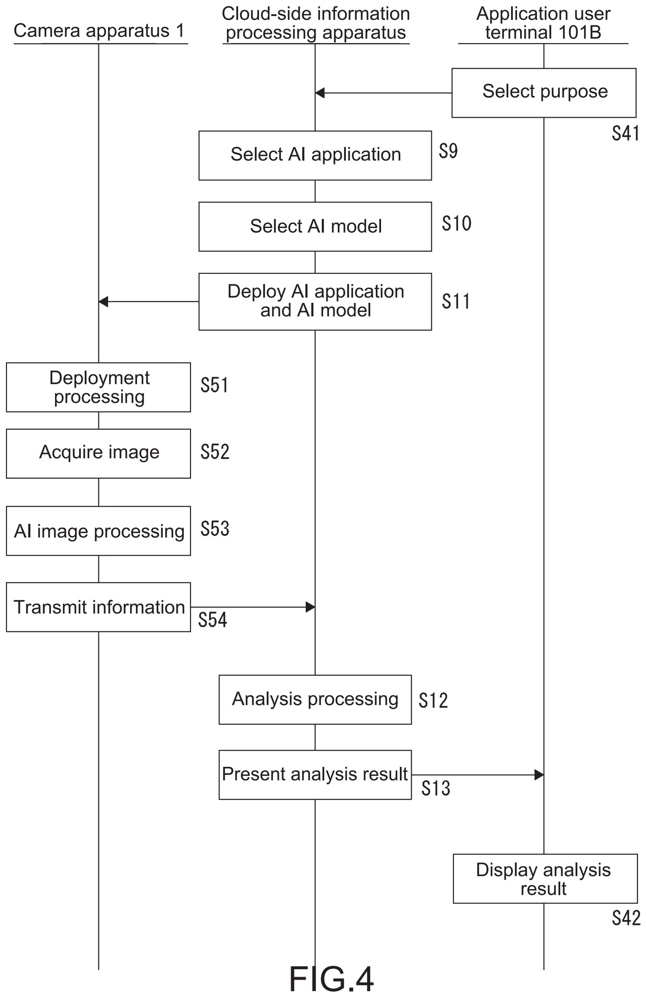

The flow of the processing described above is shown in the flowcharts of Figs. 3 and 4.

It is noted that the cloud-side information processing apparatus corresponds to the cloud server 100 and the management server 103 shown in Fig. 1, and the like.

In accordance with the AI model developer viewing a list of data sets registered in the marketplace and selecting a desired data set using the AI model developer terminal 101C including a display unit constituted of an LCD (Liquid Crystal Display), an organic EL (Electro Luminescence) panel, or the like, the AI model developer terminal 101C transmits a download request for the selected data set to the cloud-side information processing apparatus in Step S21.

In response to this, the cloud-side information processing apparatus accepts the request in Step S1, and performs processing of transmitting the requested data set to the AI model developer terminal 101C in Step S2.

In Step S22, the AI model developer terminal 101C performs processing of receiving the data set. This enables the AI model developer to develop an AI model using the data set.

After the AI model developer finishes developing the AI model, the AI model developer performs an operation to register the developed AI model in the marketplace (for example, designation of a name of the AI model, an address where the AI model is located, and/or the like). Then, in Step S23, the AI model developer terminal 101C transmits a request to register the AI model in the marketplace to the cloud-side information processing apparatus.

In response to this, the cloud-side information processing apparatus accepts the registration request in Step S3, and performs registration processing of the AI model in Step S4, so that the AI model can be displayed on the marketplace, for example. This enables users other than the AI model developer to download the AI model from the marketplace.

For example, the application developer who is to develop an AI application views a list of AI models registered in the marketplace using the application developer terminal 101A. In accordance with an operation made by the application developer (for example, an operation of selecting one of the AI models on the marketplace), the application developer terminal 101A transmits a download request for the selected AI model to the cloud-side information processing apparatus in Step S31.

The cloud-side information processing apparatus accepts the request in Step S5, and transmits the AI model to the application developer terminal 101A in Step S6.

In Step S32, the application developer terminal 101A receives the AI model. This enables the application developer to develop an AI application that uses an AI model developed by another person.

After the application developer finishes developing the AI application, the application developer performs an operation to register the AI application in the marketplace (for example, an operation to designate a name of the AI application, an address where the AI model is located, and/or the like). Then, in Step S33, the application developer terminal 101A transmits a registration request for the AI application to the cloud-side information processing apparatus.

The cloud-side information processing apparatus accepts the registration request in Step S7, and registers the AI application in Step S8, so that the AI application can be displayed on the marketplace, for example. This enables users other than the application developer to select the AI application on the marketplace and download the AI application.

As shown in Fig. 4, for example, a user who intends to use an AI application selects a purpose in the application user terminal 101B in Step S41. In the purpose selection, the selected purpose is transmitted to the cloud-side information processing apparatus.

In response to this, the cloud-side information processing apparatus selects an AI application corresponding to the purpose in Step S9, and selects an AI model in Step S10. For example, table data in which AI applications and AI models are associated with each other according to purposes is stored in the cloud-side information processing apparatus so that it is possible to select an AI application and AI model corresponding to the purpose.

In Step S11, the cloud-side information processing apparatus performs processing of deploying the selected AI application and AI model. In this deployment processing, the AI application and the AI model are transmitted to the camera apparatus 1.

In response to this, in the camera apparatus 1, the deployment processing of the AI application and the AI model is performed in Step S51. This makes it possible to perform the AI image processing on the captured image captured in the camera apparatus 1.

In Step S52, the camera apparatus 1 performs an image pickup operation to acquire an image. Then, in Step S53, the camera apparatus 1 performs the AI image processing on the acquired image to obtain, for example, an image recognition result.

In Step S54, the camera apparatus 1 performs transmission processing to transmit the captured image and the result information of the AI image processing. In the transmission of the information in Step S54, both the captured image and the result information of the AI image processing may be transmitted, or only one of them may be transmitted.

The cloud-side information processing apparatus that has received these pieces of information performs analysis processing in Step S12. By this analysis processing, the flow line analysis of customers visiting a store, vehicle analysis processing for traffic monitoring, and the like are performed.

In Step S13, the cloud-side information processing apparatus performs analysis result presentment processing. This processing is realized by the user using the cloud application described above, for example.

As a result of the analysis result presentment processing, the application user terminal 101B performs processing of displaying the analysis result on a monitor or the like in Step S42.

By the processing up to this point, the user who is a user of the AI application can obtain an analysis result corresponding to the purpose selected in Step S41.

### <1-3. General outline of functions of system>

In the present embodiment, as a service that uses the information processing system S, a service with which the user as a client can select a type of function for the AI image processing of each camera apparatus 1 is assumed. As the selection of the type of function, for example, the image recognition function, the image detection function, and/or the like may be selected, or a more detailed type may be selected so as to exert the image recognition function and/or the image detection function for a specific subject.

For example, as a business model, the service provider sells the camera apparatus 1 and the fog server 102 having the image recognition function that uses AI to a user who then intalls those camera apparatus 1 and fog server 102 at a location to be monitored. Then, a service that provides the analysis information as described above to the user is deployed.

At this time, since uses required for the system differ for each client, such as a use in monitoring a store or a use in traffic monitoring, it is possible to selectively set the AI image processing function of the camera apparatus 1 so that analysis information corresponding to the use that the client requires can be obtained.

In the present example, the management server 103 has such a function of selectively setting the AI image processing function of the camera apparatus 1.

It is noted that the function of the management server 103 may be given to the cloud server 100 and/or the fog server 102.

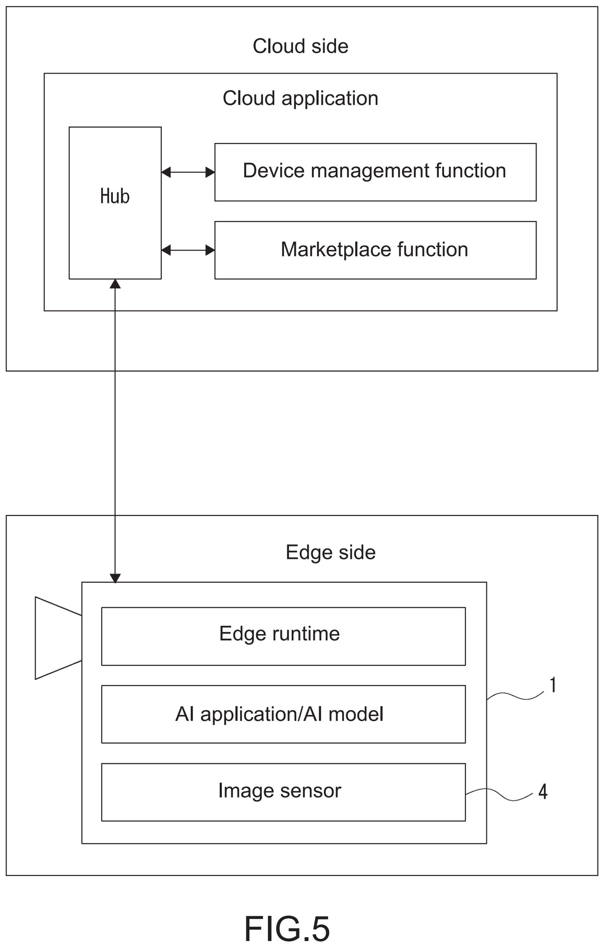

Here, the connection between the cloud server 100 and/or the management server 103 as the cloud-side information processing apparatus and the camera apparatus 1 as the edge-side information processing apparatus will be described with reference to Fig. 5.

A device management function and a marketplace function, which are functions that can be used via a Hub, are implemented in the cloud-side information processing apparatus.

The Hub performs highly reliable communication that is protected by security with the edge-side information processing apparatus. Accordingly, various functions can be provided to the edge-side information processing apparatus.

The device management function is a function of managing the camera apparatus 1 and/or the like as the edge-side information processing apparatus, and can provide, for example, a function of managing and monitoring an AI model deployed on the camera apparatus 1, a function of detecting a problem, a troubleshooting function, and/or the like.

Further, the device management function is also a function of managing information of the camera apparatus 1 and the fog server 102. The information of the camera apparatus 1 and the fog server 102 includes information of a chip used as the arithmetic processing unit, information of a memory capacity, a storage capacity, a usage rate of a CPU and/or a memory, and/or the like, information of software installed in each apparatus, such as an OS (Operating System), and the like.

In addition, the device management function is used to protect secure accesses by authenticated users.

The marketplace function provides the function described above for registering an AI model developed by the AI model developer and an AI application developed by the application developer, a function of deploying those developments on permitted edge-side information processing apparatuses, and the like. The marketplace function also provides a function related to the payment of an incentive according to the deployment of the developments.

The camera apparatus 1 as the edge-side information processing apparatus includes an edge runtime, the AI application, the AI model, and the image sensor.

The edge runtime functions as embedded software for performing management of an application deployed on the camera apparatus 1 and communication with the cloud-side information processing apparatus, and/or the like.

As described above, the AI model is a deployment of an AI model registered in the marketplace in the cloud-side information processing apparatus. Thus, the camera apparatus 1 can obtain result information of the AI image processing, that corresponds to the purpose, using the captured image.

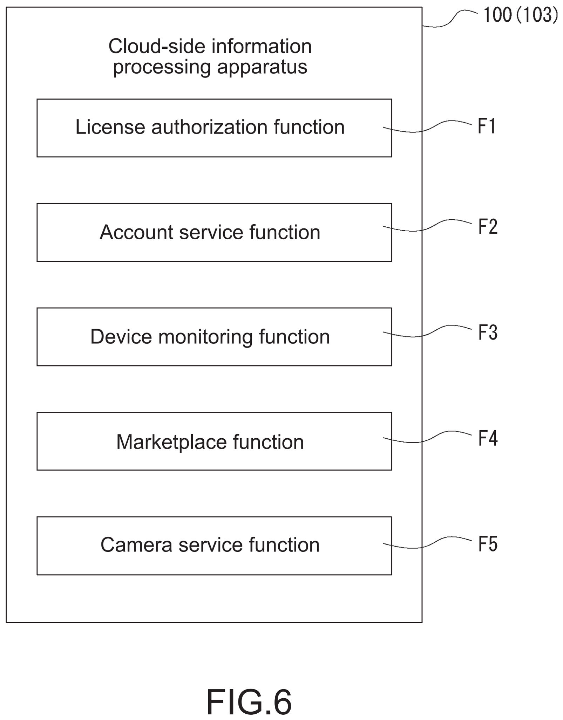

A general outline of the functions of the cloud-side information processing apparatus will be described with reference to Fig. 6. It is noted that the cloud-side information processing apparatus is a collective term for the apparatuses including the cloud server 100, the management server 103, and the like.

As shown in the figure, the cloud-side information processing apparatus has a license authorization function F1, an account service function F2, a device monitoring function F3, a marketplace function F4, and a camera service function F5.

The license authorization function F1 is a function of performing various types of processing related to authentication. Specifically, the license authorization function F1 is used to perform processing related to device authentication of each of the camera apparatuses 1 and processing related to authentication of each of an AI model, software, and firmware used in the camera apparatus 1.

Here, the software described above refers to software requisite for appropriately realizing the AI image processing in the camera apparatus 1.

For the AI image processing that is based on a captured image to be performed appropriately and for the result of the AI image processing to be transmitted to the fog server 102 and the cloud server 100 in an appropriate format, it is necessary to control the data input to the AI model and appropriately process output data of the AI model. The software described above is software that includes peripheral processing requisite for appropriately realizing the AI image processing. Such software is software for realizing desired functions using the AI model, and corresponds to the AI application described above.

It is noted that the AI application is not limited to an application that uses only one AI model, and an application that uses two or more AI models may also be used. For example, there may exist an AI application that includes a flow of processing in which information on a recognition result obtained by an AI model that executes the AI image processing using a captured image as input data (image data and/or the like; hereinafter, will be referred to as "recognition result information") is input to another AI model so as to cause second AI image processing to be performed.

In the license authorization function F1, for the authentication of the camera apparatus 1, processing of issuing a device ID (Identification) is performed for each camera apparatus 1 when the camera apparatus 1 is connected via the network NW.

Also for the authentication of the AI model and/or software, processing of issuing a unique ID (AI model ID, software ID) is performed for each of the AI application and AI model for which registration has been requested from the AI model developer terminal 101C.

Also in the license authorization function F1, processing of issuing various keys, certificates, and the like for enabling secure communication to be performed between the camera apparatus 1 and/or each user terminal 101 and the cloud server 100, to a manufacturer of the camera apparatus 1 (in particular, a manufacturer of the image sensor to be described later), the AI model developer, and the software developer is performed, and processing of updating and/or suspending the validity of the certification is also performed.

In addition, in the license authorization function F1, when user registration (registration of account information involving issuance of a user ID) is performed by the account service function F2 to be described below, processing of associating the camera apparatus 1 (the device ID described above) purchased by the user and the user ID is also performed.

The account service function F2 is a function of generating and managing user account information. In the account service function F2, an input of user information is accepted, and account information is generated based on the input user information (performs generation of account information including at least user ID and password information).

In addition, in the account service function F2, registration processing (registration of account information) for the AI model developer and/or the AI application developer (hereinafter, will also be referred to as "software developer") is also performed.

The device monitoring function F3 is a function of performing processing for monitoring a usage state of the camera apparatus 1. For example, regarding various elements related to the usage state of the camera apparatus 1, such as a usage location of the camera apparatus 1, an output frequency of output data of the AI image processing, and a free space of a CPU and/or a memory used in the AI image processing, monitoring of information on a usage rate of the CPU and/or the memory described above, and/or the like is performed.

The marketplace function F4 is a function for selling AI models and AI applications. For example, a user can purchase an AI application and an AI model used in the AI application via a sales website (sales site) provided by the marketplace function F4. In addition, the software developer can purchase an AI model for creating an AI application via the sales site described above.

The camera service function F5 is a function for providing a service related to the use of the camera apparatus 1 to the user.

One example of this camera service function F5 is the function related to the generation of analysis information described above. That is, the camera service function F5 is a function of performing processing of generating analysis information of a subject based on processing result information of the image processing in the camera apparatus 1, and causing the generated analysis information to be viewed by the user via the user terminal 101.

The camera service function F5 includes an application setting function for achieving a purpose desired by the user. The application setting function is a function of setting an appropriate AI application in accordance with the purpose of the user.

For example, an appropriate AI application and AI model are selected in accordance with a user selecting a use such as store monitoring or traffic monitoring. The selected AI application and AI model are deployed on the camera apparatus 1 as appropriate.

Here, the descriptions above have exemplified the configuration in which the license authorization function F1, the account service function F2, the device monitoring function F3, the marketplace function F4, and the camera service function F5 are realized by the cloud server 100 alone, but a configuration that realizes these functions by sharing the functions among the plurality of information processing apparatuses is also possible. For example, a configuration in which one information processing apparatus assumes one of the functions described above is conceivable. Alternatively, it is also possible for the plurality of information processing apparatuses (for example, the cloud server 100 and the management server 103) to share a single function out of the functions described above.

### <1-4. Configuration of camera apparatus>

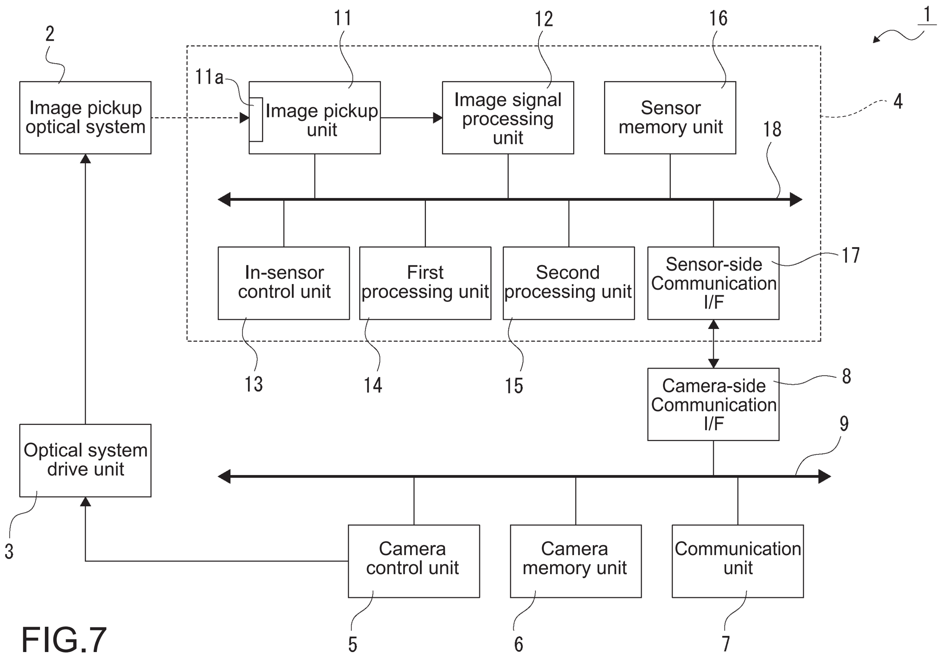

A configuration example of the camera apparatus 1 according to the first embodiment will be described with reference to Fig. 7.

The camera apparatus 1 includes an image pickup optical system 2, an optical system drive unit 3, an image sensor 4, a camera control unit 5, a camera memory unit 6, a communication unit 7, and a camera-side communication I/F 8.

The image sensor 4, the camera control unit 5, the camera memory unit 6, the communication unit 7, and the camera-side communication I/F 8 are connected via a bus 9 and are capable of performing data communication with one another.

The image pickup optical system 2 includes lenses such as a cover lens, a zoom lens, and a focus lens, and a diaphragm (iris) mechanism. Light (incident light) from a subject is guided by the image pickup optical system 2 and collected on a light-receiving surface of the image sensor 4.

The optical system drive unit 3 is a collective term for the drive units of the zoom lens, the focus lens, and the diaphragm mechanism included in the image pickup optical system 2. Specifically, the optical system drive unit 3 includes actuators for driving these zoom lens, focus lens, and diaphragm mechanism, respectively, and drive circuits for the actuators.

The camera control unit 5 is configured as a subsequent-processing chip that includes, for example, a microcomputer including a CPU, a ROM, and a RAM, and performs predetermined processing on signals output from the image sensor 4. The CPU of the camera control unit 5 executes various types of processing in accordance with programs stored in the ROM and programs loaded into the RAM, to perform overall control of the camera apparatus 1.

Further, the camera control unit 5 instructs the optical system drive unit 3 to drive the zoom lens, the focus lens, the diaphragm mechanism, and the like. In response to these drive instructions, the optical system drive unit 3 executes movements of the focus lens and the zoom lens, opening and closing of aperture blades of the diaphragm mechanism, and the like.

Furthermore, the camera control unit 5 performs control of writing and reading of various types of data to/from the camera memory unit 6.

The camera memory unit 6 is, for example, a non-volatile storage device such as an HDD (Hard Disk Drive) or a flash memory device, and is used as a save destination (recording destination) of image data output from the image sensor 4.

Furthermore, the camera control unit 5 performs various types of data communication with external apparatuses via the communication unit 7. The communication unit 7 in the present example is configured to be capable of performing data communication with at least the fog server 102 (or the cloud server 100) shown in Fig. 1.

The camera-side communication I/F 8 is an interface for communicating with the image sensor 4. The camera-side communication I/F 8 performs communication for acquiring image data output from the image sensor 4 and communication for transmitting control information for controlling the behavior of the image sensor 4 to the image sensor.

The image sensor 4 is a sensor apparatus included in the camera apparatus 1 and is configured as, for example, an image sensor of a CCD type, a CMOS type, or the like.

The image sensor 4 as the sensor apparatus included in the camera apparatus 1 refers not only to sensors that generate color images or monochrome images by performing photoelectric conversion that is based on incident visible light, but also to various other sensors including a distance measurement sensor that generates a range image, an EVS (Event based Vision Sensor) that generates an image constituted of event data, a thermosensor that generates a heat map image, a spectroscopic sensor that generates a spectroscopic image, a polarization sensor that generates a polarization image, and the like.

That is, the image sensor 4 in descriptions below is merely an example of the sensor apparatus.

The image sensor 4 includes an image pickup unit 11, an image signal processing unit 12, an in-sensor control unit 13, a first processing unit 14, a second processing unit 15, a sensor memory unit 16, and a sensor-side communication I/F 17, which are capable of performing data communication with one another via a bus 18.

The image pickup unit 11 includes a pixel array unit 11a in which pixels including photoelectric conversion elements as light-receiving portions such as photodiodes are arranged two-dimensionally, and a readout circuit that reads out an electric signal obtained by the photoelectric conversion from each of the pixels included in the pixel array unit 11a, and is capable of outputting the electric signal as pixel data as RAW data.

It is noted that the pixel data output from the pixel array unit 11a is not limited to data of color images and monochrome images, and only needs to be two-dimensional data having a value for each pixel, such as the range image, the EVS data, the heat map image, the spectroscopic image, and the polarization image. In descriptions below, image data of a color image and/or the like will be given as an example of the pixel data.

In addition, image data obtained by performing predetermined processing on the pixel data output from the pixel array unit 11a in the image pickup unit 11 may sometimes be referred to as "image data (or pixel data) output from the pixel array unit 11a".

The readout circuit included in the pixel array unit 11a executes, for example, CDS (Correlated Double Sampling) processing, AGC (Automatic Gain Control) processing, and/or the like on the electric signal obtained by the photoelectric conversion, and further performs A/D (Analog/Digital) conversion processing.

The image signal processing unit 12 performs development processing on the image data (captured image signal) as digital data obtained after the A/D conversion processing. The development processing includes, for example, pre-processing, concurrent processing, and YC generation processing, and may further include resolution conversion processing, codec processing, and the like as necessary.

In the pre-processing, clamp processing for clamping a black level of R, G, and B to a predetermined level, correction processing among R, G, and B color channels, and/or the like are performed on the image data. In the concurrent processing, color separation processing is performed so that the image data for each pixel includes all color components of R, G, and B. For example, in a case of an image pickup element that uses a Bayer array color filter, demosaic processing is performed as the color separation processing. In the YC generation processing, a luminance (Y) signal and a color (C) signal are generated (separated) from the R, G, B image data. In the resolution conversion processing, resolution conversion processing is performed on image data that has been subjected to various types of signal processing.

In the codec processing, for example, encoding processing and file generation for recording and/or communication are performed on the image data that has been subjected to the various types of processing described above. In the codec processing, for example, it is possible to generate files in formats of MPEG-2 (MPEG: Moving Picture Experts Group), H.264, and the like as moving image file formats. Further, it is also possible to generate files in formats of JPEG (Joint Photographic Experts Group), TIFF (Tagged Image File Format), GIF (Graphics Interchange Format), and the like as still image files.

The in-sensor control unit 13 instructs the image pickup unit 11 and performs execution instruction of an image pickup operation. Similarly, processing execution control is also performed with respect to the image signal processing unit 12.

The in-sensor control unit 13 detects a domain shift (domain gap) using image data output from the pixel array unit 11a, and performs a relearning instruction and/or the like of an AI model to be used in the image sensor 4 based on the detection result.

A state where a domain shift has occurred or a state where a domain gap has occurred is a state where a trend of image data at a time of learning differs from that of image data at a time of inference. For example, the occurrence of a domain shift is detected when a mode of light that enters the image pickup unit 11 of the camera apparatus 1 changes due to differences in an installation condition of the camera apparatus 1, the season, and/or the time of day. Alternatively, in a case where a person within the angle of view of the camera apparatus 1 is to be detected, the occurrence of a domain shift is detected when clothes that are worn change due to a change in the fashion trend of people or a change of the season.

It is noted that the in-sensor control unit 13 may detect a magnitude of the domain shift that has occurred, as the detection of a domain shift.

The in-sensor control unit 13 executes processing for efficiently performing relearning of an AI model.

The functions of the in-sensor control unit 13 will be described again later.

The first processing unit 14 and the second processing unit 15 can be realized by using, for example, a programmable arithmetic processing apparatus such as a DSP (Digital Signal Processor), a CPU, or an FPGA (Field Programmable Gate Array).

The first processing unit 14 performs inference processing by inputting image data to an AI model, to thus obtain an inference result and precision information (likelihood information).

Image data as input data (input tensor) to be input to the AI model is, for example, data obtained before performing the resolution conversion processing and/or the codec processing in the image signal processing unit 12. However, image data subjected to the resolution conversion processing may be input to the AI model in accordance with a rule for input data of an AI model.

It is noted that the processing of generating input data of an AI model may be realized by the in-sensor control unit 13.

The inference processing in the first processing unit 14 can be switched by changing an algorithm of the AI image processing. In other words, the function type of the AI image processing can be switched by switching the AI model used in the AI image processing. There are various function types in the AI image processing, and examples thereof include the types exemplified below.
·Class identification
·Semantic segmentation
·Person detection
·Vehicle detection
·Target tracking
·OCR (Optical Character Recognition)

Of the function types described above, class identification is a function of identifying a class of a target. The "class" used herein refers to information representing a category of an object, and distinguishes, for example, "person", "automobile", "plane", "ship", "truck", "bird", "cat", "dog", "deer", "frog", "horse", and the like from one another.

Target tracking is a function of tracking a target subject, and can be said to be a function of obtaining history information of a position of the subject.

The inference result and precision information obtained by performing the inference processing by the first processing unit 14 are provided to the in-sensor control unit 13 to be used in the detection of a domain shift described above, and the like.

It is noted that the AI model used for the inference processing by the first processing unit 14 will be referred to as an "inference model M1".

The second processing unit 15 performs relearning processing to update the inference model M1 to an optimal AI model in response to an instruction from the in-sensor control unit 13.

Here, the second processing unit 15 performs the relearning processing using an AI model different from the inference model M1. The AI model used by the second processing unit 15 in relearning will be referred to as a "relearning model M2."

By performing relearning, the relearning model M2 is updated to an AI model that outputs an inference result of higher precision than the inference model M1 at that time point.

Each parameter of the relearning model M2 is, for example, a floating-point type (float type or half float type) in order to prioritize the precision of the inference result over computating costs in the inference processing.

Meanwhile, each parameter of the inference model M1 is, for example, an integer type (int type or int8 type) in order to prioritize computing costs over inference precision due to the necessity to realize the inference processing for each frame.

The parameters of the inference model M1 are obtained by quantizing the parameters of the relearning model M2.

The second processing unit 15 performs the relearning processing of the relearning model M2, the quantization processing for the parameters of the relearning model M2, and processing of providing the quantized parameters to the first processing unit 14.

The sensor memory unit 16 is a collective term for a ROM, a RAM, an SRAM (Static RAM), and the like, and a part thereof may be provided inside the in-sensor control unit 13, the first processing unit 14, and/or the second processing unit 15.

The sensor memory unit 16 has a function as a frame memory, a function of storing the parameters of the inference model M1 and the relearning model M2, a storage function for storing image data to be used in the relearning of an AI model, and the like.

Further, the sensor memory unit 16 is used to temporarily store data that is used when the first processing unit 14 and the second processing unit 15 perform the inference processing and the relearning processing.

It is noted that the sensor memory unit 16 may also store the AI applications described above.

The sensor-side communication I/F 17 is an interface that performs communication with the camera control unit 5, the camera memory unit 6, and the like provided outside the image sensor 4. The sensor-side communication I/F 17 performs communication to obtain, from the outside, the program to be executed by the image signal processing unit 12, the AI applications or AI models to be used by the first processing unit 14 and/or the second processing unit 15, and the like, and stores them in the sensor memory unit 16 provided in the image sensor 4.

Accordingly, the AI models are stored in a part of the sensor memory unit 16 provided in the image sensor 4 so as to become usable by the first processing unit 14 and the second processing unit 15.

The information on the inference result and inference precision obtained by the first processing unit 14 is output to the outside of the image sensor 4 via the sensor-side communication I/F 17.

It is noted that image data output from the image signal processing unit 12 may be output from the sensor-side communication I/F 17.

### <1-5. Functional configuration of image sensor>

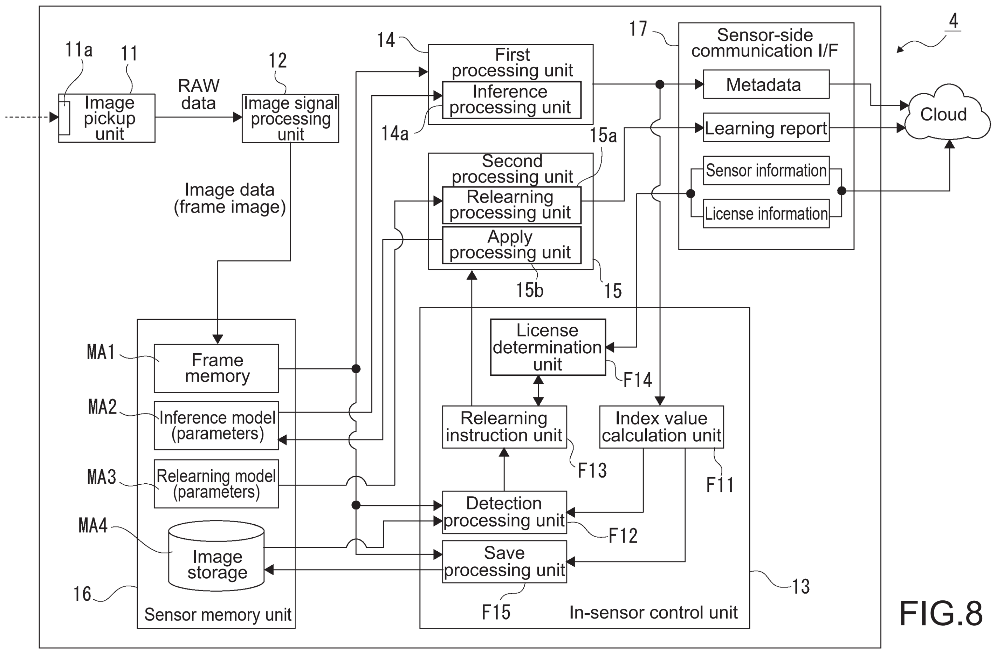

The functional configuration of the image sensor 4 is shown in Fig. 8. It is noted that Fig. 8 shows only a partial configuration of the respective units included in the image sensor 4.

The sensor memory unit 16 includes a frame memory MA1 that stores image data for each frame, a storage area MA2 that stores the parameters of the inference model M1, a storage area MA3 that stores the parameters of the relearning model M2, and an image storage MA4 that stores image data used for relearning.

RAW data generated by the image pickup unit 11 based on light that has entered the pixel array unit 11a is subjected to predetermined processing in the image signal processing unit 12, and image data is output as a frame image. The image data is stored in the frame memory MA1 of the sensor memory unit 16.

The image data stored in the frame memory MA1 is supplied to the first processing unit 14.

The first processing unit 14 is configured to include an inference processing unit 14a.

The inference processing unit 14a acquires the parameters of the inference model M1 from the storage area MA2 to perform the inference processing on the image data, that uses the inference model M1.

The inference processing unit 14a supplies information on an inference result and inference precision for the image data to the sensor-side communication I/F 17 as metadata, for example.

The sensor-side communication I/F 17 uploads the metadata to the cloud-side information processing apparatus via the camera-side communication I/F 8 and the communication unit 7 (not shown in Fig. 8) .

The in-sensor control unit 13 is configured to include an index value calculation unit F11, a detection processing unit F12, a relearning instruction unit F13, a license determination unit F14, and a save processing unit F15.

The index value calculation unit F11 receives at least the information on inference precision from the inference processing unit 14a of the first processing unit 14, and calculates an index value indicating a lowering degree of the inference precision.

The calculation of an index value is performed by, for example, calculating a difference between an average value of likelihood information obtained by quantifying the inference precision at the time of deployment and the likelihood information of the inference result for the frame image.

The index value calculated by the index value calculation unit F11 is supplied to the detection processing unit F12.

The detection processing unit F12 detects presence or absence of an occurrence of a domain shift or a magnitude of the domain shift based on the index value supplied by the index value calculation unit F11.

For example, it is detected that a domain shift has occurred or that the domain shift has become large when there is a large discrepancy between the likelihood information obtaied at the time when the inference model M1 is deployed and the likelihood information of the inference result for the frame image.

It is noted that instead of using only the inference result for one frame image, the inference results for tens, hundreds, or more pieces of image data (for example, image data for several days) may be used. That is, when the average likelihood information obtained at the time of deployment is compared with the most recent average likelihood information and there is a large discrepancy therebetween, specifically, when the most recent average likelihood information is smaller, it is determined that a domain shift has occurred.

It is noted that the detection processing unit F12 may detect a domain shift using not only the index value supplied from the index value calculation unit F11 but also other information.

For example, the detection processing unit F12 acquires image data as a latest frame image from the frame memory MA1, and further acquires past image data from the image storage MA4.

The detection processing unit F12 may calculate, for example, an average luminance value for the latest frame image and the past image data, and determine that a domain shift has occurred when there is a large discrepancy.

It is noted that the detection processing unit F12 may use information other than the average luminance value as information to be used for detecting the occurrence of a domain shift. For example, the detection processing unit F12 may detect the occurrence of a domain shift using a change in the amount of noise, a change in the amount of blur, and/or the like of image data.

When detecting the occurrence of a domain shift or when the magnitude of the domain shift becomes large, the detection processing unit F12 outputs the detection result to the relearning instruction unit F13.

When receiving information notifying that the occurrence of a domain shift has been detected from the detection processing unit F12, the relearning instruction unit F13 instructs the second processing unit 15 to execute the relearning processing of an AI model.

It is noted that the execution instruction of the relearning processing by the relearning instruction unit F13 may be performed further based on a result of determining presence or absence of a license.

For example, when receiving a notification that a domain shift has occurred, the relearning instruction unit F13 causes the license determination unit F14 to execute license information confirmation processing. The license information to be confirmed herein is, for example, license information related to the relearning service.

Upon receiving the instruction from the relearning instruction unit F13, the license determination unit F14 transmits sensor information with which the image sensor 4 can be specified to the cloud-side information processing apparatus via the sensor-side communication I/F17.

The cloud-side information processing apparatus determines whether or not the image sensor 4 holds a license that enables the relearning function to be used based on the received sensor information, and transmits the determination result to the camera apparatus 1 as license information.

The license information received by the camera apparatus 1 is supplied to the license determination unit F14 via the sensor-side communication I/F 17.

The license determination unit F14 determines whether or not the relearning processing can be executed based on the supplied license information, and notifies the relearning instruction unit F13 of the result.

The relearning instruction unit F13 instructs the second processing unit 15 of the relearning processing to execute the relearning processing based on the determination result of the license determination unit F14.

The license related to whether or not the relearning processing can be executed may be, for example, a time-limited license or license information associated with the number of times of execution of the relearning processing.

Alternatively, the license information may be provided for each function, such as the relearning processing or the inference processing.

The license confirmation timing by the license determination unit F14 is not only when requested from the relearning instruction unit F13, but may be various timings such as when the camera apparatus 1 is activated (when firmware is activated) or every certain number of frames.

As described above, the relearning instruction unit F13 instructs the second processing unit 15 to perform the relearning processing that uses the image data stored in the image storage MA4. It is desirable that the image data to be used in the relearning processing be image data that allows efficient learning.

The save processing unit F15 performs processing of determining whether or not image data as a frame image, that is stored in the frame memory, is to be stored in the image storage MA4, and storing the image data in the image storage MA4 based on the determination result.

For example, the save processing unit F15 does not store image data determined as not to be used in the relearning processing in the image storage MA4, and stores image data other than that in the image storage MA4.

It is noted that as described above, the detection processing unit F12 may use average image data of the past as a comparison target for the latest frame image, so even in the case of image data that is not to be used in the relearning processing, several or several tens of pieces of image data having average luminance values may be stored in the image storage MA4.

In addition, the save processing unit F15 may store a predetermined number of pieces of image data captured immediately after the deployment of the inference model M1 in the image storage MA4, as the comparison target for the latest frame image.

The determination by the save processing unit F15 on whether or not to save image data is performed by, for example, comparing an evaluation value calculated from the latest image data that has been acquired from the frame memory MA1 with a threshold value obtained from the comparison target image data.

For example, the save processing unit F15 compares the average luminance value (threshold value) in the comparison target image data and the average luminance value (evaluation value) calculated for the latest image data that has been acquired from the frame memory MA1, and determines that the latest image data is to be stored in the image storage MA4 when the descrepancy is larger than a predetermined level.

Alternatively, the save processing unit F15 may compare the average value (threshold value) of the amount of noise up to that point and the evaluation value of the latest image data to determine whether or not to store the image data in the image storage MA4.

For example, when the latest image data is image data obtained in a state where an amount of incident light on the pixel array unit 11a is small while conventional image data is image data obtained in a state where the amount of incident light is large, the latest image data is highly likely to be appropriate as image data to be used for relearning. In such a case, by comparing the amount of noise, it is possible to store image data in which the amount of incident light differs from that assumed in the inference processing, in the image storage MA4.

Alternatively, the save processing unit F15 may determine whether or not to store image data in the image storage MA4 by comparing the average value (threshold value) for the amount of blur up to that point and the evaluation value for the latest image data.

For example, when there is a change in an average movement of a subject, it is conceivable that precision of an inference result up to that point will be lowered. In such a case, by performing the comparison for the amount of blur, it is possible to store image data that has captured the latest movement of the subject in the image storage MA4 as image data to be used as relearning data.

Alternatively, the save processing unit F15 may determine whether or not to store image data as the latest frame image in the image storage MA4 based on the index value supplied from the index value calculation unit F11.

For example, when the index value for the latest frame image that has been calculated by the index value calculation unit F11 has changed significantly from the index value up to this point, specifically, regarding image data suspected of having a domain shift, the save processing unit F15 determines to store the image data in the image storage MA4.

It is noted that the latest frame image may be unexpected image data obtained by accident. When the relearning processing is performed using such image data, there is a high possibility that predetermined performance will not be obtained even if the inference is performed using an AI model obtained by the relearning processing.

Therefore, for example, when fluctuations of evaluation values and/or index values are observed across a plurality of frame images obtained over a predetermined period of time, such as several seconds or several minutes, the save processing unit F15 may store the latest frame image in the image storage MA4.

Furthermore, when similar image data is acquired across several frames, there is a high possibility that only one piece of image data will be useful for the relearning processing even if the image data for each frame is stored in the image storage MA4,.

Therefore, the save processing unit F15 may store one piece of image data in the image storage MA4 every several frames or every time a predetermined time such as few seconds or few minutes elapses.

Furthermore, when the time of day, season, or condition under which the inference processing is performed are determined, the save processing unit F15 may determine whether or not to store the image data in the image storage MA4 while taking into account these time of day, season, condition, and the like.

For example, in the camera apparatus 1 used as a surveillance camera in a store that is closed at night, the inference processing may be performed during the day.

In that case, image data obtained at night is not appropriate as the image data to be used in the relearning processing. Therefore, the save processing unit F15 stores only image data obtained during the day in the image storage MA4.

Based on an instruction from the relearning instruction unit F13, the second processing unit 15 performs the relearning processing of the relearning model M2.

To this end, the second processing unit 15 includes a relearning processing unit 15a and an apply processing unit 15b.

The relearning processing unit 15a performs the relearning of an AI model based on the relearning instruction supplied from the relearning instruction unit F13. At this time, the AI model to be learned is the relearning model M2 stored in the storage area MA3.

The image data used for the relearning of the relearning model M2 may be all of the image data stored in the image storage MA4, or may be some of the image data stored in the image storage MA4.

When the relearning is performed using some of the image data stored in the image storage MA4, the image data to be used for the relearning may be designated by the relearning instruction unit F13.

There are various ways to select the image data to be used as the relearning data.

For example, image data in which lowering of the inference precision is large may be mainly selected.

Alternatively, image data with an average degree of lowering of the inference precision may be selected. In other words, image data with a significantly large degree of lowering of the inference precision but small in number, and the like may be excluded before selection. This makes it possible to prevent relearning that uses irregular pixel data from being performed.

Moreover, the relearning processing may be performed in accordance with the trend of the latest image data by mainly selecting image data with recent image pickup dates.

Also for the frequency of relearning, there are various frequencies.

For example, the relearning processing unit 15a may perform the relearning processing every time the number of pieces of image data output from the pixel array unit 11a reaches a predetermined number. Furthermore, the determination on whether or not the predetermined number has been reached may be executed by the relearning instruction unit F13. In other words, every time the number of captured image data reaches a predetermined number, the relearning processing unit 15a receives a relearning execution instruction from the relearning instruction unit F13.

Alternatively, the relearning processing may be performed based on whether or not a predetermined time has elapsed instead of using the predetermined number of pieces of image data. The relearning processing may be performed when the seasons change, or the relearning processing may be performed when an installation location and/or image pickup setting of the camera apparatus 1 are changed.

Furthermore, because the relearning processing consumes resources of the image sensor 4, the relearning processing may be performed so as not to overlap with the execution timing of the inference processing.

For example, when the camera apparatus 1 is used as a surveillance camera in a store that is closed at night as in the example described above, the inference processing is likely to be performed during the day, so the relearning processing is executed at night.

The result of the relearning by the relearning processing unit 15a may be uploaded to the cloud-side information processing apparatus as a learning report.

Descriptions will be given on the parameters that are to be updated in the relearning processing by the relearning processing unit 15a.

For example, the relearning processing unit 15a may change the parameters to be updated in accordance with a magnitude of a domain shift.

Specifically, when the magnitude of a domain shift is small, the relearning processing may be performed so as to update parameters of a batch normalization layer positioned at the rearmost stage out of batch normalization layers included in the relearning model M2.

Further, when the magnitude of a domain shift is a medium level, the relearning processing may be performed so as to update the parameters of all of the batch normalization layers included in the relearning model M2.

Furthermore, when the magnitude of a domain shift is large, the relearning processing may be performed so as to update all of the parameters in the relearning model M2, regardless of whether or not it is a batch normalization layer.

It is noted that the parameters to be updated may be selected in manners other than that described above.

The apply processing unit 15b performs processing of updating the parameters of the inference model M1 using the parameters of the relearning model M2 that have been updated by the relearning processing performed by the relearning processing unit 15a.

Specifically, the apply processing unit 15b performs quantization processing for acquiring floating-point type (half float type or float type) parameters in the relearning model M2 updated by the relearning processing, and converting the parameters into integer type (int type or int8 type) parameters.

In addition, the apply processing unit 15b updates (overwrites) the parameters of the inference model M1 stored in the storage area MA2 of the sensor memory unit 16 using the quantized parameters.

### <1-6. Flow of processing>

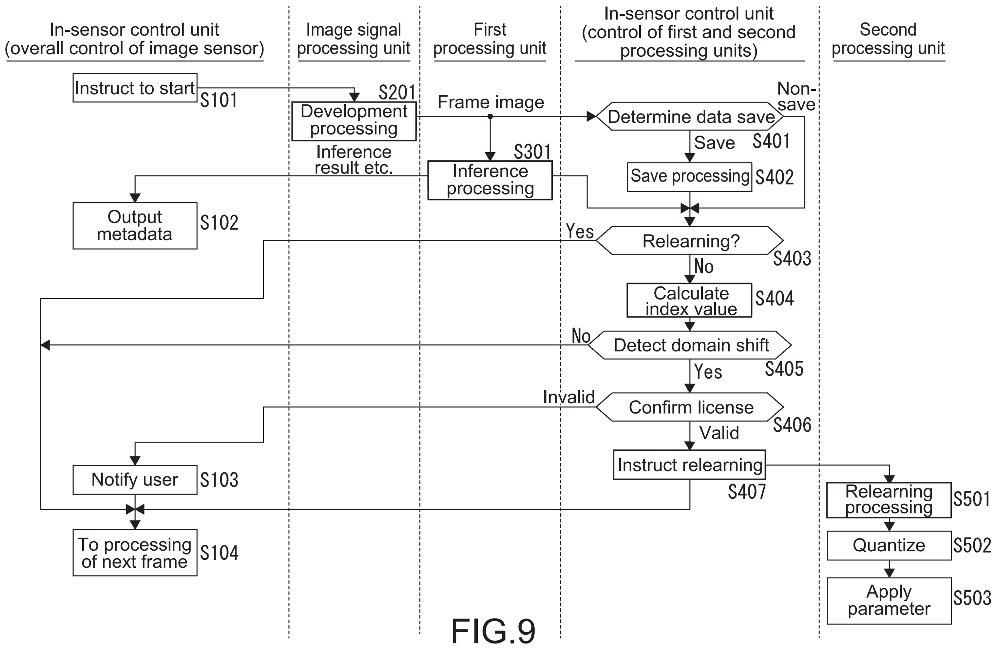

A flow of processing executed by the respective units of the image sensor 4 of the camera apparatus 1 will be described with reference to Fig. 9. It is noted that each processing shown in Fig. 9 basically indicates processing executed in one frame, but a part of the processing is executed across frames.

In Step S101, the in-sensor control unit 13 instructs to start processing for one frame.

Upon receiving the instruction to start, the image signal processing unit 12 performs development processing in Step S201. Image data as a frame image obtained by the development processing is provided to the first processing unit 14 and the in-sensor control unit 13. At this time, the image data may be provided via the frame memory MA1.

The in-sensor control unit 13 that has received the frame image determines whether or not to save (store) the data in Step S401, and when determining to save the data, performs save processing in Step S402.

Further, the first processing unit 14 that has received the frame image performs the inference processing in Step S301, and provides information on an inference result and inference precision to the in-sensor control unit 13.

The in-sensor control unit 13 outputs the received information on the inference result and the like as metadata in Step S102. The in-sensor control unit 13 also determines whether or not relearning is being performed in Step S403. When determining that relearning is being performed, the processing proceeds to processing of the next frame without executing the processing of Step S404 and subsequent steps (Step S104).

On the other hand, when determining that relearning is not being performed, the in-sensor control unit 13 calculates an index value using the received information on the inference result and the like in Step S404, and performs detection of a domain shift in Step S405. When a domain shift cannot be detected, the processing proceeds to the processing of the next frame without executing the processing of Step S406 and subsequent steps (Step S104).

Then, when determining that a domain shift has been detected, the in-sensor control unit 13 performs license confirmation in Step S406, and branches the processing based on a result of the confirmation.

Specifically, when it is determined as a result of the license confirmation that the license is invalid or that there is no license in the first place, the in-sensor control unit 13 performs user notification in Step S103, and proceeds to the processing of the next frame in Step S104.

On the other hand, when it is determined as a result of the license confirmation that there is a valid license, the in-sensor control unit 13 performs a relearning instruction to the second processing unit 15 in Step S407, and proceeds to the processing of the next frame in Step S104.

The second processing unit 15 that has received the relearning instruction updates the parameters by performing relearning of the relearning model M2 in Step S501, and quantizes the parameters in Step S502. In addition, the second processing unit 15 applies the quantized parameters to the parameters of the inference model M1 in Step S503.

It is noted that the processing of Step S501 is processing that is executed across a plurality of frames. Therefore, the determination processing of Step S403 is determined as "Yes" across several frames for which the relearning processing is being executed, and the processing of Step S404 and subsequent steps is avoided.

Furthermore, in the inference processing of Step S301 that is executed first after the parameters that have been subjected to the relearning processing and the quantization are applied as the parameters of the inference model M1, inference processing that uses the updated inference model M1 is performed.

In this manner, while the relearning processing is being executed (Step S403: determined as Yes), the in-sensor control unit 13 avoids the domain shift detection processing, the license confirmation processing, and the like so that the processing load of the in-sensor control unit 13 is reduced.

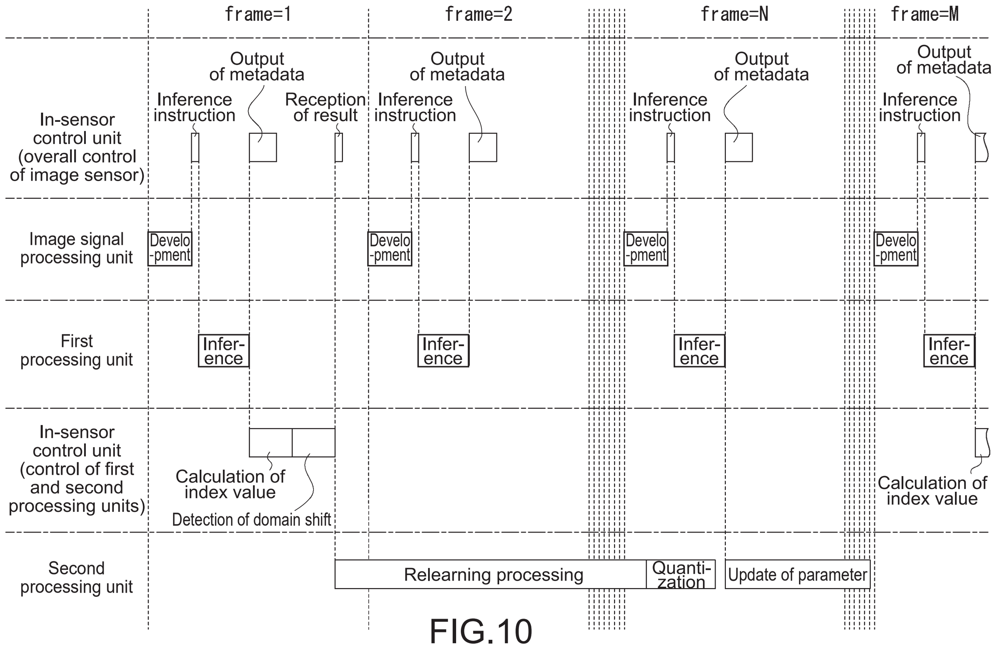

Next, an example of a timing chart is shown in Fig. 10. Fig. 10 shows a timing of each processing across a plurality of frames. It is noted that the dashed vertical lines in the figure indicate boundaries between the frames. Moreover, frames between the second frame and the N-th frame and frames between the N-th frame and the M-th frame are shown while each processing is omitted.

When a frame starts, first, the development processing is executed in the image signal processing unit 12. It is noted that in Fig. 10, a light-receiving period and a readout processing period executed before the development processing are omitted.

The in-sensor control unit 13 that has received a development processing completion notification performs an inference instruction to the first processing unit 14.

The first processing unit 14 performs the inference processing and supplies the processing completion notification and an instruction to start processing for detecting a domain shift to the in-sensor control unit 13.

The in-sensor control unit 13 performs detection of a domain shift and determines whether or not relearning should be executed. The first frame in Fig. 10 is an example of a case where it is determined that relearning should be executed.

The in-sensor control unit 13 may notify the user based on the fact that the detection of a domain shift has been completed and/or information on the detection result. Specifically, processing of notifying the user that an occurrence of a domain shift has been detected, that the precision of the inference result is being lowered as a result of the domain shift, and the like is performed.

Further, the in-sensor control unit 13 performs a relearning instruction to the second processing unit 15.

The second processing unit 15 performs the relearning processing for a period of the plurality of frames ranging from the first frame to the N-th frame. After finishing the relearning processing, the second processing unit 15 performs the quantization processing.

The second processing unit 15 that has finished the quantization processing waits until the execution of the inference processing is completed in the N-th frame, and then updates the parameters of the inference model M1. In the example shown in Fig. 10, the update of the parameters is performed from the N-th frame to the (M-1)-th frame.

It is noted that the update of the parameters used herein is performed by copying the parameters obtained by the quantization processing on the parameters of the inference model M1.

While the inference processing is executed from the second frame to the (M-1)-th frame, the processing of calculating an index value and the processing of detecting a domain shift are not executed.

In the M-th frame after the update of the parameters is completed, the inference processing that uses a new inference model M1 is performed, and the processing of calculating an index value and the processing of detecting a domain shift are resumed.

### <1-7. Modified example in first embodiment>

It is noted that the first embodiment above has described the example in which the in-sensor control unit 13 performs the overall control of the image sensor 4 in addition to the control of the first processing unit 14 and the second processing unit 15. The present technology is not limited to this, and a control unit that performs the control of the first processing unit 14 and the second processing unit 15 and a control unit that performs the overall control of the image sensor 4 may be provided separately.

Specifically, the processing of Steps S101, S102, S103, and S104 in Fig. 9 may be executed by the control unit that performs the overall control of the image sensor 4, and the processing of Steps S401, S402, S403, S404, S405, S406, and S407 in Fig. 9 may be executed by the control unit that performs the control of the first processing unit 14 and the second processing unit 15.

Furthermore, as the manner of allocation of each processing, manners other than that exemplified may be adopted.

### <2. Second embodiment>

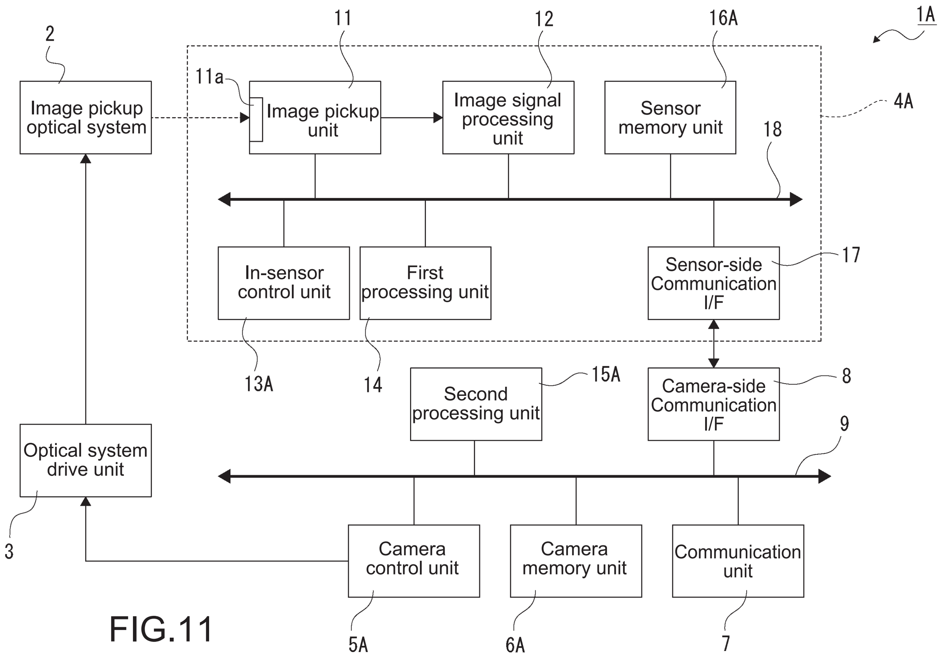

A camera apparatus 1A according to a second embodiment is a sensor apparatus and includes an image sensor 4A and a camera control unit 5A as a processing chip arranged subsequent to the image sensor 4A. A configuration example of the camera apparatus 1A will be described with reference to Fig. 11.

It is noted that configurations similar to those of the first embodiment are denoted by the same symbols, and descriptions thereof will be omitted as appropriate.

The camera apparatus 1A as the sensor apparatus includes the image pickup optical system 2, the optical system drive unit 3, the image sensor 4A, the camera control unit 5A, a camera memory unit 6A, a communication unit 7, a camera-side communication I/F 8, and a second processing unit 15A.

The camera control unit 5A, the camera memory unit 6A, the communication unit 7, the camera-side communication I/F 8, and the second processing unit 15A are capable of communicating with one another via the bus 9.

As can be seen from Fig. 11, in the camera apparatus 1A according to the present embodiment, the second processing unit 15A that performs the relearning processing is provided outside the image sensor 4A.

The image sensor 4A is provided with the image pickup unit 11 including the pixel array unit 11a, the image signal processing unit 12, an in-sensor control unit 13A, the first processing unit 14, a sensor memory unit 16A, and the sensor-side communication I/F 17.

The respective units of the image sensor 4A are capable of communicating with one another via the bus 18.

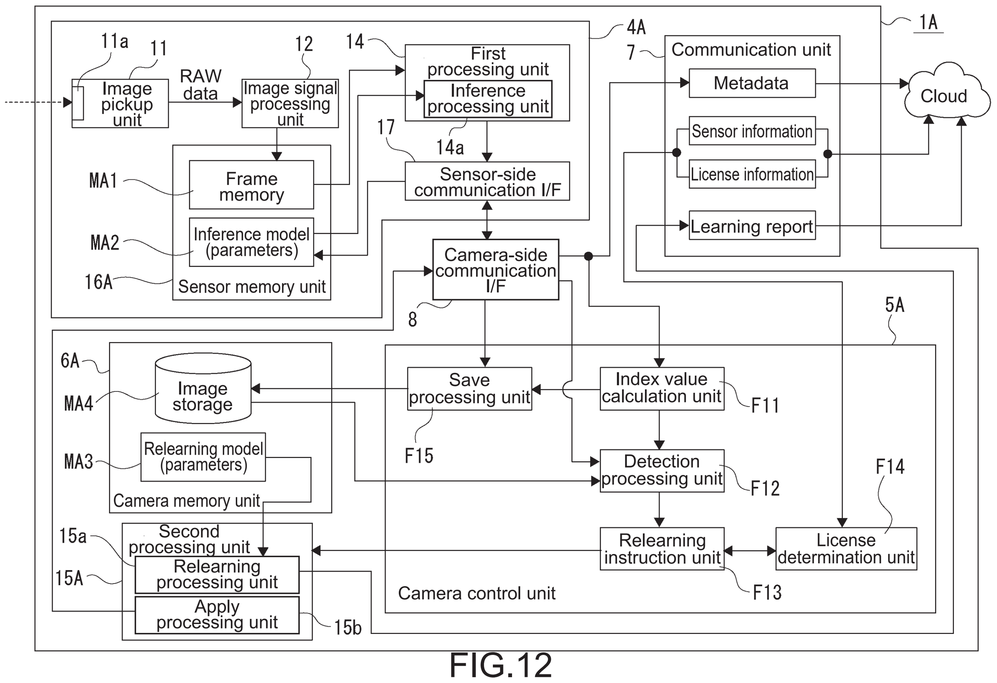

A functional configuration of the camera apparatus 1A is shown in Fig. 12. It is noted that Fig. 12 shows only a partial configuration of the respective units included in the camera apparatus 1A.

The image pickup unit 11 generates RAW data based on light that has entered the pixel array unit 11a, and stores the RAW data in the frame memory MA1 of the sensor memory unit 16A as a frame image.

The frame images stored in the frame memory MA1 are supplied to the first processing unit 14 to be used in the inference processing by the inference processing unit 14a.

The first processing unit 14 outputs information on an inference result and inference precision and the frame image as input data to the outside of the image sensor 4A via the sensor-side communication I/F 17 and the camera-side communication I/F 8. It is noted that the frame image may be supplied to the sensor-side communication I/F 17 from the frame memory MA1.

The information on the inference result and inference precision obtained via the camera-side communication I/F 8 is uploaded to the cloud-side information processing apparatus via the communication unit 7 as metadata, for example.

Further, image data as the frame image supplied to the camera control unit 5A via the camera-side communication I/F 8 is determined by the save processing unit F15 as to whether or not the image data should be saved, and is stored in the image storage MA4 of the camera memory unit 6A as appropriate.

Furthermore, the information on the inference precision supplied to the camera control unit 5A via the camera-side communication I/F 8 is used in the calculation of an index value by the index value calculation unit F11.

The calculated index value is provided to the detection processing unit F12. The detection processing unit F12 detects a domain shift using the index value from the index value calculation unit F11 or the image data as the frame image and past image data. The domain shift detection result is provided to the relearning instruction unit F13.

The relearning instruction unit F13 determines whether or not to execute relearning based on the domain shift detection result. When determining that relearning is to be executed, the relearning instruction unit F13 causes the license determination unit F14 to execute processing of confirming license information. Then, the relearning instruction unit F13 supplies a relearning instruction to the second processing unit 15A as appropriate.

Upon receiving the relearning instruction, the second processing unit 15A causes the relearning processing unit 15a to perform relearning, and also causes the apply processing unit 15b to execute the quantization processing and the parameter update processing.

The parameter update processing by the second processing unit 15A is performed by storing the parameters obtained by the quantization processing in the storage area MA2 of the sensor memory unit 16A in the image sensor 4A via the camera-side communication I/F 8 and the sensor-side communication I/F 17.

It is noted that the parameter update processing may be executed by the camera control unit 5A that has received the updated parameters from the second processing unit 15A.

As can be seen from Fig. 12, by performing the inference processing as the AI image processing in the image sensor 4A, the processing load of the image sensor 4A is reduced. Therefore, it becomes possible to miniaturize the image sensor 4A.

Further, the detection of a domain shift, the relearning processing, and the like are performed outside the image sensor 4A inside the camera apparatus 1A. Accordingly, the inference model M1 can be updated without outputting image data to the outside of the camera apparatus 1A, thereby protecting privacy.

Furthermore, an amount of data stored in the sensor memory unit 16A provided inside the image sensor 4A is set to be smaller than that of the sensor memory unit 16 in the first embodiment. Also with this, the image sensor 4A can be miniaturized. In addition, it becomes possible to use inexpensive components for the image sensor 4A.

In particular, by storing image data outside the image sensor 4A, it is possible to significantly reduce the capacity of the sensor memory unit 16 inside the image sensor 4A.

Furthermore, by providing a large-capacity storage unit as the camera memory unit 6A outside the image sensor 4A, it becomes possible to store a large amount of image data to be used for relearning, and improve performance of the inference model M1 obtained by the relearning.

### <3. Modified examples>

In the first embodiment, the first processing unit 14 and the second processing unit 15 each constituted of a DSP or the like are provided separately. However, for example, one DSP may have the function as the first processing unit 14 and the function as the second processing unit 15.

In that case, the parameters of the inference model M1 and the relearning model M2 may be in common. Specifically, the same AI model may be used for the inference and relearning.

Furthermore, when using the same AI model, the parameters of the AI model may be of the floating-point type (float type or half float type), and the parameters may be converted from the floating-point type to the integer type as appropriate when executing the inference processing.

It is noted that by using the changed parameters in a state where the parameters are loaded to an SRAM or the like in the DSP until a power supply of the camera apparatus 1 is turned off, it is possible to omit the parameter conversion processing for each inference processing.

Furthermore, at the time of relearning, the floating-point type parameters only need to be loaded again to the SRAM in the DSP to perform the relearning processing.

It is noted that the commonization of the AI model parameters is applicable even in a case where the DSP as the first processing unit 14 and the DSP as the second processing unit 15 are provided.

In the relearning processing, QAT (Quantization Aware Training) that takes into account errors caused by the quantization processing may be used. Accordingly, the inference precision can be improved.

Also in the relearning processing, an image restoration model that has been trained so as to be capable of restoring a missing part of image data may be used. Accordingly, it becomes possible to efficiently extract feature portions of the image data, and thus improve the precision of the inference processing.

The example in which the relearning processing is performed inside the image sensor 4 of the camera apparatus 1 as the edge-side information processing apparatus and the example in which the relearning processing is performed inside the camera apparatus 1A have been described. The present technology is not limited to this, and a part of the relearning processing may be executed by the cloud-side information processing apparatus.

For example, when the AI model is an AI model that estimates attribute information of a person, the image data used in the relearning processing is image data including personal information.

Therefore, it is favorable to perform such relearning processing of an AI model in the edge-side information processing apparatus.

Meanwhile, when the AI model is an AI model that estimates a product stockout, it is possible to use image data from which personal information has been removed, as the image data to be used for the relearning processing. For example, it is possible to perform relearning using image data of a moment when a person is not in the angle of view, or perform relearning using image data in which an area capturing a person in the angle of view is blacked out with a black image.

Therefore, by uploading the image data from which personal information has been removed to the cloud-side information processing apparatus, it is possible to perform the relearning processing of an AI model in the cloud-side information processing apparatus.

Accordingly, the processing loads of the image sensor 4 of the camera apparatus 1 and the camera apparatus 1A can be reduced.

### <4. Configuration of information processing apparatus>

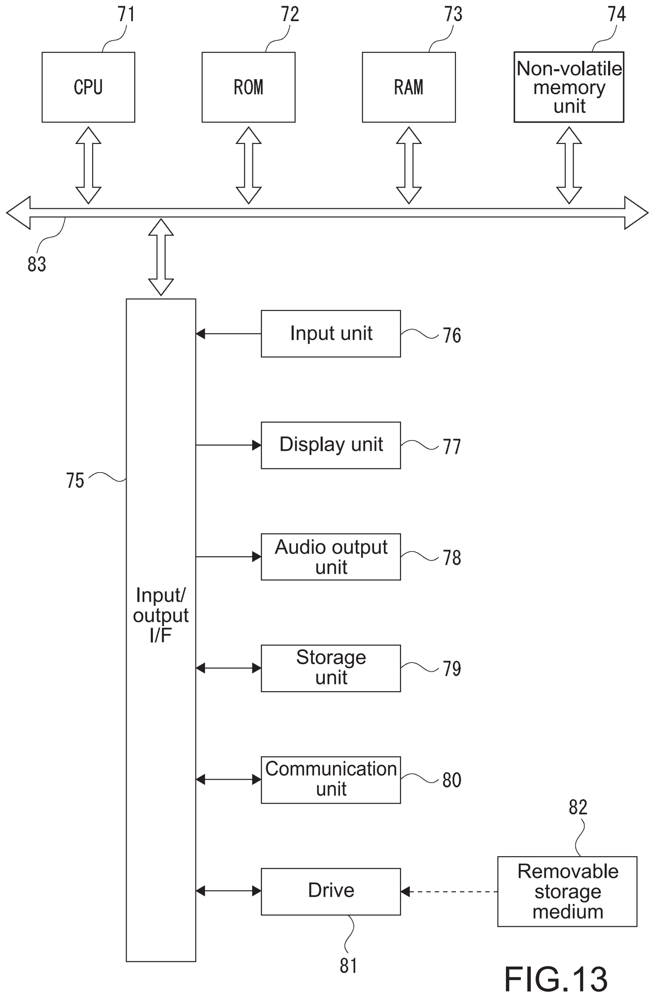

A hardware configuration of the information processing apparatus included in the information processing system S, such as the cloud server 100, the user terminal 101, the fog server 102, or the management server 103, will be described with reference to Fig. 13.

The information processing apparatus includes a CPU 71. The CPU 71 functions as an arithmetic processing unit that performs the various types of processing described above, and executes the various types of processing according to a program stored in a ROM 72 or a non-volatile memory unit 74 such as an EEP-ROM (Electrically Erasable Programmable Read-Only Memory) or a program loaded from a storage unit 79 to a RAM 73. The RAM 73 also stores, as appropriate, data and the like requisite for the CPU 71 to execute the various types of processing.

It is noted that the CPU 71 included in the information processing apparatus as the cloud server 100 functions as a license authorization unit, an account service provision unit, a device monitoring unit, a marketplace function provision unit, and a camera service provision unit in order to realize the respective functions described above.

The CPU 71, the ROM 72, the RAM 73, and the non-volatile memory unit 74 are connected to one another via a bus 83. Also connected to this bus 83 is an input/output interface (I/F) 75.

An input unit 76 constituted of an operator and/or an operation device is connected to the input/output interface 75.

For example, various operators and operation devices such as a keyboard, a mouse, a key, a dial, a touch panel, a touch pad, and a remote controller are assumed as the input unit 76.

The input unit 76 detects a user operation, and a signal corresponding to the input operation is interpreted by the CPU 71.

Further, a display unit 77 constituted of an LCD, an organic EL panel, or the like and an audio output unit 78 constituted of a speaker or the like are connected to the input/output interface 75 either integrally or separately.

The display unit 77 is a display unit that performs various displays, and is constituted of, for example, a display device provided in a housing of a computer apparatus, a display device that is provided separately and connected to the computer apparatus, or the like.

The display unit 77 executes display of images for various types of image processing, moving images to be processed, and the like on a display screen based on instructions from the CPU 71. Furthermore, the display unit 77 performs display of various operation menus, icons, messages, and the like, that is, as GUIs (Graphical User Interfaces), based on the instructions from the CPU 71.

The storage unit 79 constituted of a hard disk, a solid-state memory, or the like and/or a communication unit 80 constituted of a modem or the like may be connected to the input/output interface 75.

The communication unit 80 performs communication processing via a transmission path such as the Internet, wired/wireless communication with various devices, and communication using bus communication and/or the like.

A drive 81 is also connected to the input/output interface 75 as necessary, and a removable storage medium 82 such as a magnetic disk, an optical disc, a magneto-optical disc, or a semiconductor memory is loaded as appropriate.

The drive 81 is capable of reading data files such as programs used in the respective processing, and/or the like from the removable storage medium 82. The read data files are stored in the storage unit 79, or images and audio included in the data files are output by the display unit 77 and the audio output unit 78. In addition, the computer program and the like read out from the removable storage medium 82 are installed in the storage unit 79 as necessary.

In this computer apparatus, for example, software for the processing of the present embodiment can be installed via network communication by the communication unit 80 or via the removable storage medium 82. Alternatively, the software may be stored in advance in the ROM 72, the storage unit 79, or the like.

Further, a captured image obtained in the camera apparatus 1 and/or a processing result obtained by the AI image processing may be received and stored in the storage unit 79 or in the removable storage medium 82 via the drive 81.

The CPU 71 performs processing operations based on various programs, to thus execute information processing and communication processing requisite as the cloud server 100, which is the information processing apparatus including the arithmetic processing unit described above.

It is noted that the cloud server 100 is not limited to being configured by a single computer apparatus as shown in Fig. 13, and may be configured by systemizing a plurality of computer apparatuses. The plurality of computer apparatuses may be systemized using a LAN (Local Area Network) or the like, or may be arranged at remote locations by a VPN (Virtual Private Network) that uses the Internet, or the like. The plurality of computer apparatuses may include computer apparatuses as a server group (cloud) that can be used through a cloud computing service.

### <5. Summary>

As described in the examples above, the sensor apparatus (image sensor 4, camera apparatus 1A) according to the present technology includes the pixel array unit 11a in which pixels each including the light-receiving portion are arranged two-dimensionally, the storage unit (sensor memory units 16 and 16A) that stores a machine learning model (inference model M1) that performs the inference processing based on pixel data (for example, image data as RAW data) output from the pixel array unit 11a, the inference processing unit 14a that performs the inference processing using the machine learning model, and the relearning processing unit 15a that performs the relearning processing to update the machine learning model.

Accordingly, the machine learning model is updated within the sensor apparatus.

It is favorable to perform the relearning processing of an AI model using the pixel data output from the pixel array unit 11a. However, since the relearning processing of an AI model is generally performed outside the sensor apparatus, such as in the cloud server, it is necessary to output the pixel data output from the pixel array unit 11a to the outside of the sensor apparatus, which is not favorable from the viewpoint of privacy protection.

With the present configuration, the relearning of an AI model is performed without outputting the pixel data to the outside of the sensor apparatus. Therefore, for example, by deploying a general AI model on the sensor apparatus and then performing the relearning using the pixel data output from the pixel array unit 11a, it becomes possible to generate an AI model specialized for the deployment destination sensor apparatus while strengthening privacy protection.

Therefore, it becomes possible to perform the inference processing in the sensor apparatus with high precision.

In addition, since there is no need to transmit the pixel data for the relearning processing to another information processing apparatus (for example, the cloud-side information processing apparatus), an amount of communication between the sensor apparatus and the another information processing apparatus can be reduced. Furthermore, by reducing the amount of communication, it becomes possible to reduce power consumption of the sensor apparatus and thus prolong a lifetime and operation time of the sensor apparatus.

In addition, when the relearning processing is performed by an information processing apparatus outside the sensor apparatus, processing of transmitting relearning data and receiving an AI model obtained by the relearning processing becomes necessary. In contrast, by performing the relearning processing inside the sensor apparatus, it becomes possible to shorten a time required to update an AI model. In particular, by performing the relearning processing inside the sensor apparatus that generates pixel data to be used in the update of an AI model, the effect of time reduction can be made more prominent. Furthermore, by shortening the time required to update an AI model, it becomes possible to suppress domain shifts in real time, and perform the inference processing with high precision at all times.

As described with reference to Fig. 8 and the like, the sensor apparatus may be the image sensor 4 provided with the pixel array unit 11a, the inference processing unit 14a, and the relearning processing unit 15a.

This makes it possible to perform the relearning processing of an AI model without outputting pixel data to the outside of the image sensor 4. Therefore, it is possible to update an AI model while strengthening privacy protection.

As described with reference to Figs. 11 and 12, the sensor apparatus may be the camera apparatus 1A including the image sensor 4A provided with the pixel array unit 11a and the inference processing unit 14a and the subsequent-processing chip (camera control unit 5A) provided with the relearning processing unit 15a.

Accordingly, the relearning processing of an AI model can be performed without outputting pixel data to the outside of the camera apparatus 1A. Therefore, the AI model can be favorably updated while protecting privacy.

As described with reference to Fig. 8 and the like, the sensor apparatus (image sensor 4, camera apparatus 1A) may include the relearning instruction unit F13 that supplies an execution instruction of the relearning processing to the relearning processing unit 15a.

Accordingly, the relearning processing is performed as appropriate based on various conditions. Therefore, the AI model can be updated before the inference precision of the AI model is lowered intensely. Furthermore, by updating the AI model substantially in real time, it becomes possible to effectively and swiftly suppress domain shifts.

As described with reference to Fig. 8 and the like, the sensor apparatus (image sensor 4, camera apparatus 1A) may include the detection processing unit F12 that detects a domain shift (or domain gap) for pixel data, and the relearning instruction unit F13 may perform the execution instruction of the relearning processing based on the detection result on the domain shift.

Examples of the case where a domain shift becomes large include a case where the luminance value of the pixel data changes due to a change in season or time or a change of an installation location, a case where fashion trends change when performing person detection that uses an AI model, and the like.

With the present configuration, the relearning processing is executed as appropriate in a case where a domain shift becomes large due to a change of an installation environment of the sensor apparatus, and/or the like. Examples of the case where a domain shift becomes large include a case where the luminance value of the pixel data changes due to a change in season or time or a change of an installation location, a case where fashion trends change when performing person detection that uses an AI model, and the like.

Therefore, it is possible to prevent the precision of the inference result from lowering additionally, and perform the inference processing with high precision.

As described with reference to Fig. 8 and the like, the sensor apparatus (image sensor 4, camera apparatus 1A) may include the index value calculation unit F11 that calculates an index value indicating lowering of the precision of the inference result, and the detection processing unit F12 may detect a domain shift based on a change in the calculated index value.

The index value indicating lowering of the precision of the inference result is, for example, likelihood information obtained by quantifying the precision of the inference result, and/or the like. When the likelihood information is lowered, the detection of a domain shift is performed assuming that the precision of the inference result has been lowered.

Accordingly, the relearning processing is performed moderately so that the precision of the inference result is not lowered too much, making it possible to continue performing the inference processing with high precision.

As described with reference to Fig. 8 and the like, the detection processing unit F12 in the sensor apparatus (image sensor 4, camera apparatus 1A) may detect a domain shift based on a change in the average luminance value for the pixel data.

Accordingly, lowering of the precision of the inference result due to a change in the average luminance value can be suppressed by the relearning processing.

As described with reference to Fig. 8 and the like, the sensor apparatus (image sensor 4, camera apparatus 1A) may include the save processing unit F15 that stores pixel data while excluding pixel data that has been determined not to be used in the relearning processing.

Accordingly, at least the pixel data that is not to be used for the relearning processing does not need to be stored, it becomes possible to reduce the storage capacity required for the image storage MA4, and achieve cost reductions.

Furthermore, since an amount of data of a population when selecting pixel data to be used in the relearning processing can be reduced, the relearning processing can be performed efficiently.

As described with reference to Fig. 8 and the like, the save processing unit F15 in the sensor apparatus (image sensor 4, camera apparatus 1A) may perform the determination by comparing the evaluation value calculated for the pixel data with the threshold value.

This makes it possible to determine whether or not to store the pixel data by simple processing, that is, the comparison processing, and thus reduce the processing load.

As described with reference to Fig. 8 and the like, in the sensor apparatus (image sensor 4, camera apparatus 1A), the pixel array unit 11a may output luminance data as the pixel data, and the save processing unit F15 may perform the comparison using an average luminance value of the luminance data calculated as the evaluation value and a threshold value.

In other words, the pixel array unit 11a is a pixel array unit 11a that outputs data of color images, monochrome images, and the like.

The save processing unit F15 can compare a threshold value that has been set based on the average luminance value of image data used in the learning up to that point and an average luminance value of newly obtained image data, to determine whether or not to use the image data in the relearning processing

This makes it easy to allocate data to be used in the relearning processing by simple processing.

As described with reference to Fig. 8 and the like, the sensor apparatus (image sensor 4, camera apparatus 1A) may include the index value calculation unit F11 that calculates an index value indicating lowering of the precision of the inference result, and the save processing unit F15 may determine that the pixel data for which an index value indicating a small drop of the precision has been calculated is not to be used in the relearning processing.

The pixel data with which the inference result of high precision has been obtained is regarded as favorable pixel data for an AI model with no domain shift. Since such pixel data is unlikely to become effective learning data when a domain shift occurs, by not storing such pixel data in advance, only the learning data effective for the relearning processing can be stored.

As described with reference to Fig. 8 and the like, the relearning processing unit 15a in the sensor apparatus (image sensor 4, camera apparatus 1A) may perform the relearning processing using the stored pixel data based on the execution instruction of the relearning processing.

Accordingly, it becomes possible for the relearning processing unit 15a to perform the relearning processing at a favorable timing. This makes it possible to prevent a situation where the resources of the sensor apparatus are consumed unnecessarily to cause a delay in the output of the inference result.

As described with reference to Fig. 8 and the like, the relearning processing unit 15a in the sensor apparatus (image sensor 4, camera apparatus 1A) may select pixel data to be used in the relearning processing from the stored pixel data.

Accordingly, the pixel data to be used in the relearning processing can be favorably selected from the pixel data stored in the image storage MA4, and thus the relearning processing can be performed efficiently.

It is noted that the pixel data to be used in the relearning processing may be, for example, pixel data with a large drop in the inference precision, or may be average pixel data out of the pixel data selectively stored in the image storage MA4. Furthermore, relatively new pixel data may be mainly selected while taking into account the captured date and time.

As described with reference to Fig. 9 and the like, the detection processing unit F12 in the sensor apparatus (image sensor 4, camera apparatus 1A) does not need to perform the detection of a domain shift while the relearning processing unit 15a is performing the relearning processing.

The domain shift detection result is used for determining whether or not the relearning processing can be executed. Therefore, by avoiding the detection of a domain shift when the relearning processing is already being performed, it is possible to reduce the processing load of the sensor apparatus.

As described with reference to Fig. 8 and the like, in the sensor apparatus (image sensor 4, camera apparatus 1A), the parameters of the inference model M1, which is the machine learning model to be used by the inference processing unit 14a in the inference processing, may be parameters obtained by quantizing the parameters of the relearning model M2, which is the machine learning model obtained by the relearning processing perfromed by the relearning processing unit 15a.

For example, when the parameters are floating-point type (half float type or float type) variables, the inference precision can be improved but the processing time required for the inference processing is prolonged. On the other hand, when the parameters are integer type (int type or int8 type) variables, the processing time required for the inference processing becomes shorter.

Therefore, while an AI model of high performance is generated by using the floating-point type variables in the relearning processing, the AI model used in the actual inference processing can easily execute the inference processing for each frame by performing quantization to convert the floating-point type variables into integer type variables.

In other words, it is possible to achieve both the higher precision in the processing result of the inference processing and shortening of the processing time.

It is noted that the AI model used in the relearning processing is capable of extracting an excellent feature amount by using an image restoration model in a feature amount extraction layer. The inference precision can be improved by using an AI model configured to include the feature amount extraction layer.

As described with reference to Fig. 8 and the like, the relearning instruction unit F13 in the sensor apparatus (image sensor 4, camera apparatus 1A) may perform an execution instruction of the relearning processing every time the number of pieces of pixel data output from the pixel array unit 11a reaches a predetermined number.

This makes it possible to update the AI model regularly and automatically.

As described with reference to Fig. 8 and the like, the sensor apparatus (image sensor 4, camera apparatus 1A) may include the license determination unit F14 that determines whether or not the license for the relearning service is valid, and the relearning instruction unit F13 may perform an execution instruction of the relearning processing based on the determination result of the license determination unit F14.

Accordingly, it becomes possible to prevent unnecessary relearning processing from being performed in a sensor apparatus operated by a user who has not paid for the relearning service, and prevent the processing load from increasing.

As described with reference to Fig. 8 and the like, the relearning processing unit 15a in the sensor apparatus (image sensor 4, camera apparatus 1A) may perform the relearning processing using the parameters of the batch normalization layer included in the machine learning model as an update target.

This makes it possible to generate an AI model capable of performing highly precise inference processing while suppressing the processing load of the relearning processing.

An information processing method according to the present technology includes executing, by a computer apparatus, processing of storing a machine learning model (inference model M1) that performs inference processing based on pixel data output from the pixel array unit 11a in which pixels each including a light-receiving portion are arrayed two-dimensionally, the inference processing that uses the machine learning model, and relearning processing for updating the machine learning model.

The program executed by the sensor apparatus such as the image sensor 4 or the camera apparatus 1A described above can be recorded in advance in an HDD (Hard Disk Drive) as a recording medium built into a device such as a computer apparatus, a ROM in a microcomputer including a CPU, or the like. Alternatively, the program can be temporarily or permanently stored (recorded) in a removable recording medium such as a flexible disk, a CD-ROM (Compact Disk Read Only Memory), an MO (Magneto Optical) disk, a DVD (Digital Versatile Disc), a Blu-ray disc^{®}, a magnetic disk, a semiconductor memory, or a memory card. Such a removable recording medium can be provided as so-called packaged software.

Furthermore, such a program can be installed from the removable recording medium into a personal computer or the like, or can be downloaded from a download site via a network such as a LAN (Local Area Network) or the Internet.

It is noted that the effects described in the present specification are mere examples and are not limit, and other effects may also be obtained.

Furthermore, the examples described above may be combined in any way, and even when various combinations are used, the various operational effects described above can be obtained.

### <6. Present technology>

It is noted that the present technology can also take the following configurations.
(1) A sensor apparatus, including:
   a pixel array unit in which pixels each including a light-receiving portion are arrayed two-dimensionally;
   a storage unit which stores a machine learning model that performs inference processing based on pixel data output from the pixel array unit;
   an inference processing unit which performs the inference processing using the machine learning model; and
   a relearning processing unit which performs relearning processing for updating the machine learning model.
(2) The sensor apparatus according to (1), in which
   the sensor apparatus is an image sensor provided with the pixel array unit, the inference processing unit, and the relearning processing unit.
(3) The sensor apparatus according to (1), in which
   the sensor apparatus is a camera apparatus including an image sensor provided with the pixel array unit and the inference processing unit and a subsequent-processing chip provided with the relearning processing unit.
(4) The sensor apparatus according to any one of (1) to (3), including:
   a relearning instruction unit which supplies an execution instruction of the relearning processing to the relearning processing unit.
(5) The sensor apparatus according to (4), including:
   a detection processing unit which detects a domain shift regarding the pixel data, in which
   the relearning instruction unit performs the execution instruction of the relearning processing on the basis of a detection result on the domain shift.
(6) The sensor apparatus according to (5), including:
   an index value calculation unit which calculates an index value indicating lowering of precision regarding a result of the inference processing, in which
   the detection processing unit detects the domain shift on the basis of a change in the calculated index value.
(7) The sensor apparatus according to any one of (5) to (6), in which
   the detection processing unit detects the domain shift on the basis of a change in an average luminance value regarding the pixel data.
(8) The sensor apparatus according to any one of (1) to (7), including:
   a save processing unit which stores the pixel data while excluding the pixel data for which it has been determined that the pixel data is not to be used in the relearning processing.
(9) The sensor apparatus according to (8), in which
   the save processing unit performs the determination by comparing an evaluation value calculated for the pixel data and a threshold value.
(10) The sensor apparatus according to (9), in which
   the pixel array unit outputs luminance data as the pixel data, and
   the save processing unit performs the comparison using an average luminance value of the luminance data calculated as the evaluation value and the threshold value.
(11) The sensor apparatus according to any one of (8) to (10), including:
   an index value calculation unit which calculates an index value indicating lowering of precision regarding a result of the inference processing, in which
   the save processing unit determines that the pixel data for which the index value indicating that the lowering of precision is small has been calculated is not to be used in the relearning processing.
(12) The sensor apparatus according to any one of (8) to (11), in which
   the relearning processing unit performs the relearning processing using the stored pixel data on the basis of the execution instruction of the relearning processing.
(13) The sensor apparatus according to (12), in which
   the relearning processing unit selects the pixel data to be used in the relearning processing from the stored pixel data.
(14) The sensor apparatus according to any one of (5) to (7), in which
   the detection processing unit does not perform the detection of the domain shift while the relearning processing unit is performing the relearning processing.
(15) The sensor apparatus according to any one of (1) to (14), in which
   parameters of an inference model set as the machine learning model to be used by the inference processing unit in the inference processing are obtained by quantizing parameters of a relearning model set as the machine learning model obtained by the relearning processing performed by the relearning processing unit.
(16) The sensor apparatus according to any one of (4) to (7), in which
   the relearning instruction unit performs the execution instruction of the relearning processing every time a number of pieces of the pixel data output from the pixel array unit reaches a predetermined number.
(17) The sensor apparatus according to any one of (4) to (7), including:
   a license determination unit which determines whether or not a license for a relearning service is valid, in which
   the relearning instruction unit performs the execution instruction of the relearning processing on the basis of a determination result of the license determination unit.
(18) The sensor apparatus according to any one of (1) to (17), in which
   the relearning processing unit performs the relearning processing using parameters of a batch normalization layer included in the machine learning model as an update target.
(19) A program for causing an arithmetic processing apparatus to execute:
   processing of storing a machine learning model that performs inference processing based on pixel data output from a pixel array unit in which pixels each including a light-receiving portion are arrayed two-dimensionally;
   the inference processing that uses the machine learning model; and
   relearning processing for updating the machine learning model.
(20) An information processing method, including:
   executing, by a computer apparatus,
   processing of storing a machine learning model that performs inference processing based on pixel data output from a pixel array unit in which pixels each including a light-receiving portion are arrayed two-dimensionally,
   the inference processing that uses the machine learning model, and
   relearning processing for updating the machine learning model.

### Reference Signs List

- 1A: camera apparatus (sensor apparatus)
- 4: image sensor (sensor apparatus)
- 5A: camera control unit (subsequent-processing chip)
- 11a: pixel array unit
- 14a: inference processing unit
- 15a: relearning processing unit
- 16, 16A: sensor memory unit (storage unit)
- F11: index value calculation unit
- F12: detection processing unit
- F13: relearning instruction unit
- F14: license determination unit
- F15: save processing unit
- M1: inference model (machine learning model)
- M2: relearning model (machine learning model)

## Claims

1. A sensor apparatus, comprising:
a pixel array unit in which pixels each including a light-receiving portion are arrayed two-dimensionally;
a storage unit which stores a machine learning model that performs inference processing based on pixel data output from the pixel array unit;
an inference processing unit which performs the inference processing using the machine learning model; and
a relearning processing unit which performs relearning processing for updating the machine learning model.

2. The sensor apparatus according to claim 1, wherein
the sensor apparatus is an image sensor provided with the pixel array unit, the inference processing unit, and the relearning processing unit.

3. The sensor apparatus according to claim 1, wherein
the sensor apparatus is a camera apparatus including an image sensor provided with the pixel array unit and the inference processing unit and a subsequent-processing chip provided with the relearning processing unit.

4. The sensor apparatus according to claim 1, comprising:
a relearning instruction unit which supplies an execution instruction of the relearning processing to the relearning processing unit.

5. The sensor apparatus according to claim 4, comprising:
a detection processing unit which detects a domain shift regarding the pixel data, wherein
the relearning instruction unit performs the execution instruction of the relearning processing on a basis of a detection result on the domain shift.

6. The sensor apparatus according to claim 5, comprising:
an index value calculation unit which calculates an index value indicating lowering of precision regarding a result of the inference processing, wherein
the detection processing unit detects the domain shift on the basis of a change in the calculated index value.

7. The sensor apparatus according to claim 5, wherein
the detection processing unit detects the domain shift on the basis of a change in an average luminance value regarding the pixel data.

8. The sensor apparatus according to claim 1, comprising:
a save processing unit which stores the pixel data while excluding the pixel data for which it has been determined that the pixel data is not to be used in the relearning processing.

9. The sensor apparatus according to claim 8, wherein
the save processing unit performs the determination by comparing an evaluation value calculated for the pixel data and a threshold value.

10. The sensor apparatus according to claim 9, wherein
the pixel array unit outputs luminance data as the pixel data, and
the save processing unit performs the comparison using an average luminance value of the luminance data calculated as the evaluation value and the threshold value.

11. The sensor apparatus according to claim 8, comprising:
an index value calculation unit which calculates an index value indicating lowering of precision regarding a result of the inference processing, wherein
the save processing unit determines that the pixel data for which the index value indicating that the lowering of precision is small has been calculated is not to be used in the relearning processing.

12. The sensor apparatus according to claim 8, wherein
the relearning processing unit performs the relearning processing using the stored pixel data on a basis of the execution instruction of the relearning processing.

13. The sensor apparatus according to claim 12, wherein
the relearning processing unit selects the pixel data to be used in the relearning processing from the stored pixel data.

14. The sensor apparatus according to claim 5, wherein
the detection processing unit does not perform the detection of the domain shift while the relearning processing unit is performing the relearning processing.

15. The sensor apparatus according to claim 1, wherein
parameters of an inference model set as the machine learning model to be used by the inference processing unit in the inference processing are obtained by quantizing parameters of a relearning model set as the machine learning model obtained by the relearning processing performed by the relearning processing unit.

16. The sensor apparatus according to claim 4, wherein
the relearning instruction unit performs the execution instruction of the relearning processing every time a number of pieces of the pixel data output from the pixel array unit reaches a predetermined number.

17. The sensor apparatus according to claim 4, comprising:
a license determination unit which determines whether or not a license for a relearning service is valid, wherein
the relearning instruction unit performs the execution instruction of the relearning processing on a basis of a determination result of the license determination unit.

18. The sensor apparatus according to claim 1, wherein
the relearning processing unit performs the relearning processing using parameters of a batch normalization layer included in the machine learning model as an update target.

19. A program for causing an arithmetic processing apparatus to execute:
processing of storing a machine learning model that performs inference processing based on pixel data output from a pixel array unit in which pixels each including a light-receiving portion are arrayed two-dimensionally;
the inference processing that uses the machine learning model; and
relearning processing for updating the machine learning model.

20. An information processing method, comprising:
executing, by a computer apparatus,
processing of storing a machine learning model that performs inference processing based on pixel data output from a pixel array unit in which pixels each including a light-receiving portion are arrayed two-dimensionally,
the inference processing that uses the machine learning model, and
relearning processing for updating the machine learning model.
